(19) Europäisches Patentamt
European Patent Office
Office européen des brevets

(11) **EP 4 503 181 A1**

(12) **EUROPEAN PATENT APPLICATION**
published in accordance with Art. 153(4) EPC

(43) Date of publication:
**05.02.2025 Bulletin 2025/06**

(21) Application number: **23781441.3**

(22) Date of filing: **31.03.2023**

(51) International Patent Classification (IPC):
*H01M 4/36* [(2006.01)]     *H01M 4/525* [(2010.01)]
*H01M 4/505* [(2010.01)]     *H01M 10/052* [(2010.01)]
*H01M 4/02* [(2006.01)]

(52) Cooperative Patent Classification (CPC):
**H01M 4/02; H01M 4/36; H01M 4/505; H01M 4/525; H01M 10/052;** Y02E 60/10

(86) International application number:
**PCT/KR2023/004395**

(87) International publication number:
**WO 2023/191592 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 KR 20220040818**

(71) Applicant: **SK On Co., Ltd.**
**Seoul 03161 (KR)**

(72) Inventors:
• **NOH, Mi Jung**
**Daejeon 34124 (KR)**
• **CHOI, Jae Ho**
**Daejeon 34124 (KR)**
• **LEE, Tae Kyoung**
**Daejeon 34124 (KR)**
• **KANG, Min Suk**
**Daejeon 34124 (KR)**
• **HWANG, Duck Chul**
**Daejeon 34124 (KR)**

(74) Representative: **Prüfer & Partner mbB**
**Patentanwälte · Rechtsanwälte**
**Sohnckestraße 12**
**81479 München (DE)**

(54) **POSITIVE ELECTRODE ACTIVE MATERIAL**

(57) The present invention may provide a cathode active material that exhibits excellent structural stability and lifespan retention rate even in a high-temperature environment where a battery is operating. In addition, the present invention may provide a cathode including an active material layer containing the cathode active material and provide a battery cell including the cathode. In addition, the present invention is aimed at providing a battery cell assembly including the battery cell. In addition, the present invention may provide an electric device including one or more selected from the group consisting of the battery cell and the battery cell assembly.

FIG. 1

**Description**

[Technical Field]

The present invention relates to a cathode active material. Specifically, the present invention relates to a cathode active material applied to lithium secondary batteries. In addition, the present invention relates to the application of the cathode active material.

[Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

Recently, the demand for high energy density batteries for electric vehicles (EVs) is growing, and for this purpose, the development of secondary batteries using high Nibased cathodes is essential. However, lithium-ion secondary batteries have the problem that the structural stability and lifespan retention rate are reduced in high-temperature environments during operation, and so there is still a demand for cathode active materials that may solve these problems.

[Cited Documents]

[Patent Document 1] Korean Patent Publication 10-2022-0150693 (Title of invention: Battery module having excellent cooling efficient)
[Patent Document 2] Korean Patent Publication 10-2022-0142853 (Title of invention: Battery pack and manufacturing method thereof)

[Disclosure]

[Technical Problem]

One object of the present invention is to provide a cathode active material that exhibits excellent structural stability and lifespan retention rate even in a high-temperature environment where a battery is operating.

In addition, another object of the present invention is to provide a cathode including an active material layer containing the cathode active material, and to provide a battery cell including the cathode. In addition, sill another object of the present invention is to provide a battery cell assembly including the battery cell. In addition, yet another object of the present invention is to provide an electric device including one or more selected from the group consisting of the battery cell and the battery cell assembly.

[Technical Solution]

A cathode active material according to one embodiment of the present invention may include a metal composite 10 including lithium compound particles represented by Structural Formula 1 below. In addition, $R_1$ according to Mathematical Formula 1 below may be in the range of 0.6 or more to 1 or less. In addition, $R_2$ according to Mathematical Formula 2 below may be in the range of 0.05 or more to 0.8 or less:

[Structural Formula 1] $\quad\quad Li_xNi_aCo_bMn_cM^1_dM^2_eO_{2+y}$

In Structural Formula 1, $0.95 \leq x \leq 1.10$, $0.75 \leq a \leq 1$, $0 < b \leq 0.2$, $0 < c \leq 0.2$, $0 < d \leq 0.15$, $0 < e \leq 0.1$, and $-0.5 \leq y \leq 0.1$, and $M^1$ is a first metal element, $M^2$ is a second metal element, wherein the first metal element may include one or more selected from the group consisting of Al, Ti, Zr, Sb, and Nb, and the second metal element may include one or more selected from the group consisting of Sr, Mg, Ba, Y, and Ce. Meanwhile, in another embodiment, the second metal element may include Sr.

$$[\text{Mathematical Formula 1}]$$

$$R_1 = M_1/A$$

In Mathematical Formula 1, $M^1$ is the percentage by atoms of the first metal element in the lithium compound particles, and A is the percentage by atoms of the first metal element in the metal composite,

[Mathematical Formula 2]

$$R_2 = W_B/W_A$$

In Mathematical Formula 2, $W_B$ is the percentage by weight of the second metal element based on the total weight of the metal composite, and $W_A$ is the percentage by weight of the first metal element based on the total weight of the metal composite.

In a cathode active material according to one embodiment of the present invention, the metal composite 10 may include an extra-particle region 12, and the extra-particle region 12 may include one or more selected from the group consisting of oxides, sulfides, sulfur oxides, fluoroxides, and hydrates of the first metal element.

In a cathode active material according to one embodiment of the present invention, the lithium compound particles 11 may include the first metal element in the range of 0.001 mole to 0.1 mole based on 1 mole of total lithium element.

In a cathode active material according to one embodiment of the present invention, the lithium compound particles 11 may include the second metal element in the range of 0.0001 mole to 0.05 mole based on 1 mole of total lithium element.

In a cathode active material according to one embodiment of the present invention, in the lithium compound particles 11, the first metal element may include Al and may further include one or more selected from the group consisting of Ti, Zr, Sb, and Nb.

In a cathode active material according to one embodiment of the present invention, $R_P$ according to the following Mathematical Formula P may be in the range of 0.1 to 10,000:

[Mathematical Formula P]

$$R_P = N_{Al}/N_{M1}$$

In Mathematical Formula P, $N_{Al}$ is the percentage by mole of Al based on the total number of moles of the metal composite 10, and $N_{M1}$ is the combined percentage by mole of Ti, Zr, Sb, and Nb based on the total number of moles of the metal composite 10.

In a cathode active material according to one embodiment of the present invention, in the lithium compound particles 11, the first metal element may include Al and Ti, and $R_Q$ according to the following Mathematical Formula Q may be in the range of 1,000 to 10,000:

[Mathematical Formula Q]

$$R_Q = N_{Al}/N_{Ti}$$

In Mathematical Formula Q, $N_{Al}$ is the percentage by mole of Al based on the total number of moles of the metal composite 10, and $N_{Ti}$ is the percentage by mole of Ti based on the total number of moles of the metal composite 10.

In a cathode active material according to one embodiment of the present invention, in the lithium compound particles 11, the first metal element may include Al and Zr, and $R_R$ according to the following Mathematical Formula R may be in the range of 0.1 to 50:

In a cathode active material according to one embodiment of the present invention, in the lithium compound particles 11, the first metal element may include Al and Zr, and $R_R$ according to the following Mathematical Formula R may be in the range of 0.1 to 50:

[Mathematical Formula R]

$$R_R = N_{Al}/N_{Zr}$$

In Mathematical Formula R, $N_{Al}$ is the percentage by mole of Al based on the total number of moles of the metal composite 10, and $N_{Zr}$ is the percentage by mole of Zr based on the total number of moles of the metal composite 10.

In a cathode active material according to one embodiment of the present invention, $R_S$ according to the following Mathematical Formula S may be in the range of 1 to 100:

[Mathematical Formula S]

$$R_S = N_{Al}/N_{Sb}$$

In Mathematical Formula S, $N_{Al}$ is the percentage by mole of Al based on the total number of moles of the metal composite, and $N_{Sb}$ is the percentage by mole of Sb based on the total number of moles of the metal composite 10.

In a cathode active material according to one embodiment of the present invention, in the lithium compound particles 11, the first metal element may include Al and Nb, and $R_T$ according to the following Mathematical Formula T may be in the range of 1 to 50:

[Mathematical Formula T]

$$R_T = N_{Al}/N_{Nb}$$

In Mathematical Formula T, $N_{Al}$ is the percentage by mole of Al based on the total number of moles of the metal composite 10, and $N_{Nb}$ is the percentage by mole of Nb based on the total number of moles of the metal composite 10.

A cathode according to one embodiment of the present invention may include a cathode current collector and a cathode active material layer provided on at least one surface of the cathode current collector, wherein the cathode active material layer may include a cathode active material according to one embodiment of the present invention.

A battery cell 1 according to one embodiment of the present invention may include an electrode assembly and an electrolyte solution, wherein the electrode assembly may include a cathode, an anode, and a separator interposed between the cathode and the anode, wherein the cathode may include a cathode current collector and a cathode active material layer provided on at least one surface of the cathode current collector, and the cathode active material layer may include the cathode active material.

A cell assembly according to one embodiment of the present invention may include one or more battery cells 1, and at least one of the battery cells 1 may include a battery cell 1 according to one embodiment of the present invention.

An electric device according to one embodiment of the present invention may include one or more selected from the group consisting of one or more battery cells 1 and one or more battery cell assemblies, wherein at least one of the battery cells 1 may include a battery cell 1 according to one embodiment of the present invention, and at least one of the battery cell assemblies may include a battery cell assembly according to one embodiment of the present invention.

A method of preparing a metal composite 10 according to one embodiment of the present invention may include: preparing a precursor of the metal composite with a dispersion including a nickel compound, a cobalt compound, and a manganese compound; and calcining a mixture including one or more of the prepared precursor of the metal composite, a lithium compound, and a second compound including a second metal element, wherein the calcining may include temperature raising in which the temperature is raised from room temperature to a final temperature in the range of 650 °C to 750 °C at a temperature raising rate of 1 °C/min to 8 °C/min, wherein one or more selected from the group consisting of the dispersion and the mixture may include at least one first compound including the first metal element, wherein the first metal element may include one or more selected from the group consisting of Al, Ti, Zr, Sb, and Nb, and wherein the second metal element may include one or more selected from the group consisting of Sr, Mg, Ba, Y, and Ce. Meanwhile, in another embodiment, the second metal element may include Sr.

In a method of preparing a metal composite 10 according to one embodiment of the present invention, the calcining may further include thermally treating in the range of 5 to 20 hours while maintaining the final temperature.

In a method of preparing a metal composite 10 according to one embodiment of the present invention, the calcining may be performed in an environment where oxygen ($O_2$) gas passes.

In a method of preparing a metal composite 10 according to one embodiment of the present invention, in the calcining, oxygen gas may be passed at a flow rate in the range of 1 mL/min to 50 mL/min.

In a method of preparing a metal composite 10 according to one embodiment of the present invention, the preparing a precursor of the metal composite may include subjecting the dispersion to a reaction in a basic environment.

[Advantageous Effects]

The present invention may provide a cathode active material that exhibits excellent structural stability and lifespan retention rate even in a high-temperature environment where a battery is operating.

In addition, the present invention may provide a cathode including an active material layer containing the cathode active material and provide a battery cell including the cathode. In addition, the present invention is aimed at providing a battery cell assembly including the battery cell. In addition, the present invention may provide an electric device including one or more selected from the group consisting of the battery cell and the battery cell assembly.

[Description of Drawings]

FIG. 1 shows a diagram illustrating a metal composite according to one embodiment of the present application.

FIG. 2 shows (a) a three-dimensional atom probe tomography (APT) analysis image illustrating a first metal element ($M^1$) included in the entire metal composite within a measurement range in a metal composite of Example 5 according to one embodiment of the present invention; and (b) a three-dimensional APT analysis image illustrating a first metal element ($M^1$) included in lithium compound particles in the metal composite (region inside the cylindrical shape).

FIG. 3 shows (a) a three-dimensional APT analysis image illustrating a first metal element ($M^1$) included in the entire metal composite within a measurement range in a metal composite of Example 6 according to one embodiment of the present invention; and (b) a three-dimensional APT analysis image illustrating a first metal element ($M^1$) included in lithium compound particles in the metal composite (region inside the cylindrical shape).

FIG. 4 shows (a) a three-dimensional APT analysis image illustrating a first metal element ($M^1$) included in the entire metal composite within a measurement range in a metal composite of Comparative Example 3 according to one embodiment of the present invention; and (b) a three-dimensional APT analysis image illustrating a first metal element ($M^1$) included in lithium compound particles in the metal composite (region inside the cylindrical shape).

FIG. 5 shows (a) a three-dimensional APT analysis image illustrating a first metal element ($M^1$) included in the entire metal composite within a measurement range in a metal composite of Comparative Example 5 according to one embodiment of the present invention; and (b) a three-dimensional APT analysis image illustrating a first metal element ($M^1$) included in lithium compound particles in the metal composite (region inside the cylindrical shape).

FIG. 6 shows a series of manufacturing processes of a probe for the APT using scanning electron microscope (SEM) images.

FIG. 7 shows SEM images of an analysis area in the three-dimensional APT in the present invention.

FIG. 8 shows the Scanning Electron Microscope-Energy Dispersive X-ray spectroscopy (SEM-EDX) analysis area of the metal composite prepared in Example 8 according to one embodiment of the present invention.

FIG. 9 shows the results of SEM-EDX analysis of the metal composite prepared in Example 8 according to one embodiment of the present invention, specifically (a) the results from an area showing all the positions of the first metal element included in the metal composite within the measurement range; and (b) the results of an area showing the positions of the first metal element included in the lithium compound particles within the measurement range.

FIG. 10 shows a diagram illustrating the structure of a battery cell according to one embodiment of the present invention.

FIG. 11 shows a diagram illustrating the structure of a battery module according to one embodiment of the present invention.

FIG. 12 shows a diagram illustrating the structure of a battery pack according to one embodiment of the present invention.

[Modes of the Invention]

The structural or functional descriptions of the embodiments disclosed in the present specification are merely illustrative for the purpose of explaining the embodiments according to the technical idea of the present invention. In addition, embodiments according to the technical idea of the present invention may be implemented in various forms other than the embodiments disclosed in the present specification. In addition, the technical idea of the present invention is not to be construed as being limited to the embodiments described in the present specification.

Among the physical properties mentioned in the present specification, in cases where the measurement temperature affects the physical properties, the properties are those measured at room temperature and normal pressure, unless otherwise specified

The term 'room temperature,' as used in the present specification, is a natural temperature that is not heated or cooled, and it may refer to, for example, any temperature in the range of 10 °C to 30 °C, for example, about 15 °C or higher, about 18 °C or higher, about 20 °C or higher, about 23 °C or higher, about 27 °C or lower, or 25 °C. Unless otherwise specified in the present specification, the unit of temperature is Celsius (°C).

Among the physical properties mentioned in the present specification, in cases where the measured pressure affects the physical properties, unless otherwise specified, the physical properties are the physical properties measured at normal pressure.

The term 'normal pressure,' as used in the present specification, is a natural pressure that is not pressurized or depressurized, and an atmospheric pressure in the range of about 700 mmHg to 800 mmHg is typically referred to as normal pressure.

The term 'a to b,' as used in the present specification, refers to within the range between a and b including a and b. For example, including a to b parts by weight has the same meaning as including within the range of a to b parts by weight.

In the present specification, the term 'battery' may be used with the same meaning as cell, and the battery or cell may be a general term referring to a battery cell 1, which is a unit thereof, a battery module 2, or a battery pack 3, including the battery cell.

The present invention may provide a cathode active material that exhibits excellent structural stability and lifespan retention rate even in a high-temperature environment where a battery is operating. In addition, the present invention may provide a cathode including an active material layer containing the cathode active material and provide a battery cell 1 including the cathode. In addition, the present invention is aimed at providing a battery cell assembly including the battery cell 1. In addition, the present invention may provide an electric device including one or more selected from the group consisting of the battery cell 1 and the battery cell assembly.

The term 'battery cell assembly,' used in the present specification, may be a term encompassing a battery module 2 and a battery pack 3. In other words, the battery cell assembly may be a battery module 2 including a battery cell 1 or a battery pack 3 including one or more selected from the group consisting of the battery cell 1 and the battery module 2.

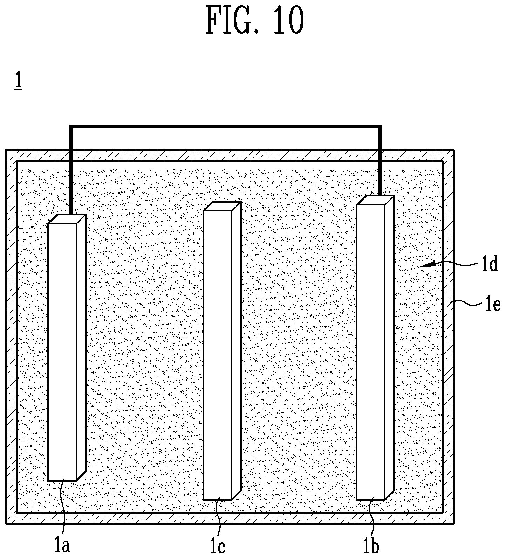

In the present specification, for examples of a battery cell 1, a battery module 2, and a battery pack 3, FIGS. 10 to 12 may be referred to, respectively.

The structure of the battery cell 1 according to one embodiment of the present invention may be a known structure. For the structure of the battery cell 1, for example, FIG. 10 may be referred to. The battery cell 1 may include an electrode assembly and an electrolyte solution 1d. Referring to FIG. 10, the electrode assembly may include a cathode 1a, an anode 1b, and a separator 1c. In addition, referring to FIG. 10, the battery cell 1 may have a structure including a cathode 1a, an anode 1b with a separator 1c interposed between the cathode 1a and the anode 1b. In addition, the battery cell 1 may have a structure in which an electrolyte solution 1d is filled in a space sealed by an exterior material 1e.

The cathode (cathode, 1a) refers to a reduction electrode through which an electron transfer material receives electrons when a battery cell 1 is discharged. The cathode 1a may include a cathode current collector and a cathode active material layer, and the cathode active material layer may be formed of a cathode slurry composition. In addition, the cathode active material layer and the cathode slurry composition may include a cathode active material. The cathode active material may include a metal composite according to one embodiment of the present invention, which will be described later. In addition to the above-described metal composite, the cathode active material may further include an additional active material that may be applied to a cathode in the art. The type of the additional active material is not particularly limited, but examples thereof may include, for example, layered compounds such as lithium cobalt oxide ($LiCoO_2$) and lithium nickel oxide ($LiNiO_2$) or compounds substituted with one or more transition metals; lithium iron oxides such as $LiFe_3O_4$; lithium manganese oxides such as $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, and $Cu_2V_2O_7$; Ni site type lithium nickel oxides represented by the chemical formula of $LiNi_{1-c2}M_{c2}O_2$ (where M is at least one selected from the group consisting of Co, Mn, Al, Cu, Fe, Mg, B, and Ga and satisfies $0.01 \leq c2 \leq 0.3$); lithium manganese composite oxides represented the chemical formula of $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); lithium nickel cobalt manganese (NCM) composite oxides, lithium nickel cobalt manganese aluminum (NCMA) composite oxides, and $LiMn_2O_4$ in which part of Li in the chemical formula is replaced with an alkaline earth metal ion.

The metal composite according to one embodiment of the present invention may be one of lithium NCM composite oxides. In addition, the metal composite may be a lithium NCM composite oxide doped with an additional metal element.

The metal composite according to one embodiment of the present invention may provide a cathode active material that exhibits excellent structural stability and lifespan retention rate even in a high-temperature environment where a battery is operating, by controlling the type of a doped metal element and the content or number ratio of the doped metal element.

The anode(anode, 1b) refers to an oxidation electrode through which an electron transfer material transfers electrons when a battery cell 1 is discharged. The anode 1b may include an anode current collector and an anode active material layer, and the anode active material layer may be formed of an anode slurry composition. In addition, the anode active material layer and the anode slurry composition may include an anode active material. The type of the anode active material is not particularly limited, but for example, a compound capable of reversible intercalation and deintercalation of lithium may be used. Specific examples include carbonaceous materials such as graphite (artificial graphite, natural graphite, or graphitized carbon fiber) or amorphous carbon; metallic compounds that can be alloyed with lithium, such as Si, Al, Sn, Pb, Zn, Bi, In, Mg, Ga, Cd, Si alloy, Sn alloy, or Al alloy; metal oxides capable of doping and dedoping lithium, such as $SiO_\beta$ ($0 < \beta \leq 2$), $SnO_2$, vanadium oxides, or lithium vanadium oxides; or a composite material including the above-described metallic compounds and carbonaceous materials, such as a Si-C composite or Sn-C composite, and any one of these or a mixture of two or more of these may be used. In addition, a metallic lithium thin film may be used as the anode active material. Carbon materials such as low-crystalline carbon and high-crystalline carbon may be used. Representative examples of low-crystalline carbon include soft carbon and hard carbon. High-crystalline carbon includes amorphous, plate-shaped, flaky, spherical or fibrous natural graphite or artificial graphite, Kish graphite, pyrolytic carbon, mesophase pitch based carbon fiber, mesocarbon microbeads, mesophase pitches, and high-temperature calcined carbon such as petroleum or coal tar pitch derived cokes.

The cathode 1a and the anode 1b may include each active material layer formed by applying each slurry composition on each current collector and drying it. According to the need, rolling may be performed after the active material layer is dried. The method of performing the application is not particularly limited, and any known method may be used. Specifically, the method of performing the application may include a method using a slot die, a doctor blade method, a dip method, a reverse roll method, a direct roll method, a gravure method, an extrusion method, or a brushing method. The slurry composition may be applied to an appropriate thickness in consideration of the thickness after drying, and may be performed by appropriately selecting the above-mentioned known method depending on the application thickness. In addition, the rolling may be performed using a rolling jig or the like according to a known method.

The type, size, and shape of the current collector used in the cathode 1a are not particularly limited as long as the current collector is conductive without causing chemical changes in the battery cell 1. As the cathode current collector 1a, for example, stainless steel, aluminum, nickel, titanium, calcined carbon, or aluminum or stainless steel of which surface is treated with carbon, nickel, titanium, or silver may be used.

The type, size, and shape of the current collector used in the anode 1b are not particularly limited as long as the current collector is conductive without causing chemical changes in the battery cell 1. As the anode current collector, copper, stainless steel, aluminum, nickel, titanium, calcined carbon, copper or stainless steel of which surface is treated with carbon, nickel, titanium, or silver, or aluminum-cadmium alloy may be used.

**In** addition, the current collector and active material layer may have an appropriate thickness according to the need. Although not particularly limited, the current collector may have a thickness in the range of 1 $\mu$m to 500 $\mu$m, a thickness in the range of 1 $\mu$m to 300 $\mu$m, a thickness in the range of 1 $\mu$m to 100 $\mu$m, or a thickness in the range of 1 $\mu$m to 50 $\mu$m. In addition, although not particularly limited, the active material layer may have a thickness in the range of 1 $\mu$m to 500 $\mu$m, a thickness in the range of 1 $\mu$m to 300 $\mu$m, a thickness in the range of 1 $\mu$m to 100 $\mu$m, or a thickness in the range of 1 $\mu$m to 50 $\mu$m.

**In** addition, each active material layer of the cathode 1a and the anode 1b may further include a binder. The binder used is not particularly limited as long as it is used in the art. For example, as the binder, one or more selected from the group consisting of polyvinylidene fluoride (PVDF), polyvinyl alcohol, styrene-butadiene rubber (SBR), polyethylene oxide, carboxyl methyl cellulose (CMC), cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, ethylene vinyl acetate copolymer (polyethylene-co-vinyl acetate), and polyarylate may be used.

In addition, each active material layer of the cathode 1a and the anode 1b may independently additionally contain a conductive material as needed. The conductive material is not particularly limited as long as it is conductive without causing chemical changes in the battery cell. For example, as a conductive material, conductive materials such as graphite such as natural graphite and artificial graphite; carbon black, such as carbon black, acetylene black, Ketjen black, channel black, Paneth black, lamp black, and thermal black; conductive fibers such as carbon fiber and metal fiber; conductive tubes such as carbon nanotubes (CNTs); metal powder such as fluorocarbon, aluminum, and nickel powder; conductive whiskers such as zinc oxide and potassium titanate; conductive metal composites such as titanium oxide; and conductive materials such as polyphenylene derivatives may be used.

In addition, each active material layer of the cathode 1a and the anode 1b may each independently further include a thickener, a reinforcing material, a leveling agent, or an electrolyte solution additive, according to the need. The types of these are not particularly limited as long as they are used in the art.

In addition, the slurry composition forming each active material layer of the cathode 1a and the anode 1b may include ingredients included in the above-described active material layer. In addition, the slurry composition may each independently further include a solvent. The solvent may be appropriately set in consideration of the desired performance, or the like, and may be an aqueous solvent such as water (pure water or ultrapure water, etc.), an organic solvent, or a mixed solvent of two or more types. For example, as the solvent, an organic solvent such as N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, formamide, dimethylformamide, acetonitrile, nitromethane, methyl formate, methyl acetate, phosphate triester, trimethoxy methane, sulfolane, methyl sulfolane, 1,3-dimethyl-2-imidazolidinone, propylene carbonate derivatives, tetrahydrofuran derivatives, methyl propionate, alcohol, and ethyl propionate, or aqueous solvents such as water may be used, but water is most preferable in consideration of drying temperature and environmental effects.

In addition, the current collector may form fine irregularities on the surface to further strengthen the adhesive strength with each active material layer. For example, the shape of the current collector may be one or more selected from the group consisting of film, sheet, foil, net, porous material, foam, and non-woven fabric.

In addition, the separator 1c refers to a membrane through which an electron transport material passes while preventing an electrical short circuit between the cathode 1a and the anode 1b. The separator may be used without particular limitations as long as it is commonly used in the art. In particular, the separator preferably has low resistance to ion migration of an electrolyte solution and has excellent wettability with the electrolyte solution. Specifically, a porous polymer film, for example, a porous polymer film made of polyolefin polymers such as ethylene polymers, propylene polymers, ethylene/butene copolymers, ethylene/hexene copolymers, and ethylene/methacrylate copolymers, or a laminated structure of two or more layers thereof may be used. In addition, conventional porous nonwoven fabrics, for example, nonwoven fabrics made of high-melting point glass fibers, polyethylene terephthalate fibers, or the like may be used. In addition, a coated separator including ceramic ingredients or polymer materials may be used to ensure heat resistance or mechanical strength, and may optionally be used in a single-layer or multi-layer structure.

In addition, the electrolyte solution 1d refers to a medium that causes the movement of an electron transport material to smoothly allow for electrochemical reactions between the cathode 1a and the anode 1b. As the electrolyte solution, a commonly used organic liquid electrolyte, an inorganic liquid electrolyte, a gel-type polymer electrolyte, or a molten-type inorganic electrolyte may be used, but is not limited thereto. Meanwhile, FIG. 10 shows an electrolyte solution 1d in a liquid state, but as described above, a solid-state electrolyte such as a gel-type polymer electrolyte may also be used. Batteries using a solid-state electrolyte are generally referred to as solid batteries or all-solid batteries. Electrolytes in a liquid state (electrolyte solutions) generally include an organic solvent and a lithium salt.

As the organic solvent, any organic solvent may be used without particular limitation as long as it can serve as a medium through which ions involved in the electrochemical reaction of the battery cell may migrate. Specifically, as the organic solvent, ester-based solvents such as methyl acetate, ethyl acetate, $\gamma$-butyrolactone, and $\varepsilon$-caprolactone; ether-based solvents such as dibutyl ether and tetrahydrofuran; ketonebased solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R is a straight-chain, branched or ring-structured hydrocarbon group having 2 to 20 carbon atoms and may include a double bond, an aromatic ring, or an ether bond) and amides such as dimethylformamide; dioxolanes such as 1,3-dioxolane; or sulfolane or the like may be used. In the above, the hydrocarbon group may be one or more selected from the group consisting of an alkyl group, an alkenyl group, or an alkynyl group. Meanwhile, among the above, a carbonate-based solvent is preferred as an organic solvent, and a mixture of a cyclic carbonate (e.g., ethylene carbonate or propylene carbonate, etc.) having high ionic conductivity and high dielectric constant that can improve the charging and discharging performance of battery cells and a low-viscosity linear carbonate-based compound (e.g., ethyl methyl carbonate, dimethyl carbonate, or diethyl carbonate) is more preferable.

As the lithium salt, any compound may be used without particular limitation as long as it is a compound that can provide lithium ions. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$ may be used. The concentration of the lithium salt is preferably used within the range of 0.1 to 2.0 M. When the concentration of the lithium salt is within the above-described range, the electrolyte solution has appropriate conductivity and viscosity, so excellent electrolyte solution performance may be achieved, and lithium ions may migrate effectively.

In addition to the electrolyte solution ingredients, the electrolyte solution may further include, for example, one or more types of additive such as haloalkylene carbonate-based compounds such as difluoroethylene carbonate, pyridine, triethyl phosphite, triethanolamine, cyclic ether, ethylene diamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride for the purpose of improving battery lifespan characteristics, suppressing battery capacity reduction, and improving battery discharge capacity.

In the above, batteries are classified into various types depending on the type of the electron transport material. For example, when the electron transport material is lithium (Li, including the ions), the battery is referred to as a lithium ion battery.

In addition, the exterior material 1e may protect the cathode 1a, the anode 1b, and the separator 1c from external shock and prevent the electrolyte solution 1d from leaking out. Depending on the shape of the exterior material 1e, battery cells 1 may be classified into a prismatic shape, a cylindrical shape, or a pouch shape. In the present invention, a battery cell 1 may preferably be of a pouch shape.

The battery cell 1 according to one embodiment of the present invention may have a discharge capacity of 2.3 mAh/g or more, 2.31 mAh/g or more, or 2.32 mAh/g or more compared to the percentage by nickel molar ratio. When the discharge capacity compared to the percentage by nickel molar ratio satisfies the above-mentioned lower limit or more, the battery may be evaluated as having excellent physical properties. The higher the discharge capacity compared to the percentage by nickel molar ratio, the better the physical properties, so the upper limit is not particularly limited, but may be, for example, 5 mAh/g or less or 3 mAh/g or less. The discharge capacity compared to percentage by nickel molar ratio may be measured according to the <Method of measuring physical properties> below.

The battery cell 1 according to one embodiment of the present invention may have a high-temperature lifespan retention rate (LR) according to the Formula CR below of 70% or more, 71% or more, 72% or more, 73% or more, 74% or more, 75% or more, 76 % or more, 77% or more, 78% or more, 79% or more, or 80% or more. When the $L_R$ according to the Formula CR below satisfies the above-mentioned lower limit or more, the battery may be evaluated as having an excellent life maintenance rate. The higher the high-temperature $L_R$, the better the physical properties, so the upper limit is not particularly limited, but may be, for example, 100% or less or 99% or less. In addition, high temperature here may refer to a temperature relatively higher than room temperature and may refer to about 40 °C or higher, 45 °C or higher, 100 °C or lower, 80 °C or lower, or 60 °C or lower. The $L_R$ according to the following Formula CR may be specifically measured according to the <Method of measuring physical properties>.

[Formula CR]

$$L_R = L_2/L_1 \times 100 \, (\%)$$

In Formula CR, $L_1$ is the discharge capacity of a battery cell in one cycle under the condition that 45 °C is maintained, and $L_2$ is the discharge capacity of the battery cell in 500 cycles under the condition that 45 °C is maintained, where one cycle is defined as charging to 4.2 V and 0.05 C at 0.5 C current and in the constant currentconstant voltage (CC-CV) charging mode at 45 °C and then discharging to 2.5 V at 0.5 C current.

In the battery cell 1 according to one embodiment of the present invention, the total amount of gas generated when 500 cycles of charging and discharging are performed under condition that 45 °C is maintained may be is 10 mL/g or less, 9.5 mL/g or less, and 9 mL/g. or less, 8.5 mL/g or less, 8 mL/g or less, 7.5 mL/g or less, 7 mL/g or less, 6.5 mL/g or less, 6 mL/g or less, 5.5 mL/g or less, 4 mL/g or less, 3.5 mL/g, or less or 3 mL/g or less. When the total amount of gas satisfies the above-mentioned upper limit or less, the battery may be evaluated as having excellent gas generation prevention performance. The lower the total gas amount, the better the physical properties, so the lower limit is not particularly limited, but may be, for example, 0.1 mL/g or more or 0.5 mL/g or more. The total amount of gas may be measured according to the amount of gas generated in the <Method of measuring physical properties> below.

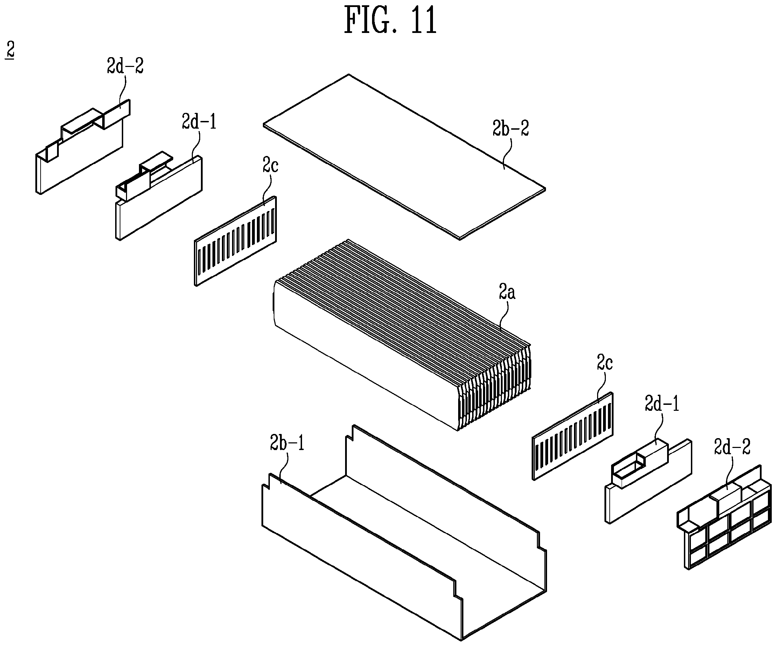

The structure of the battery module (battery module, 2) according to one embodiment of the present invention may be a known structure. For the structure of the battery module 2, for example, FIG. 11 may be referred to. Referring to FIG. 11, the battery module 2 may have a structure including a battery cell unit 2a, upper and lower housings 2b-1 and 2b-2, a busbar 2c, and inner and outer covers 2d-1 and 2d-2. In addition, for the components of the battery module 2, Patent Document 1 may be referred to.

The battery module 2 may refer to a structure in which one or more battery cells 1 are placed in a housing to protect them from external shock, heat, and vibration. The battery module 2 may be distinguished from the assembly of the battery cells 1 in the sense that it has a structure in which one or more battery cells 1 are placed in a housing.

The battery cell unit 2a may refer to a structure in which one or more battery cells 1 are included, and when there are multiple battery cells, the battery cells 1 are electrically connected in series and/or parallel. The battery cell unit 2a may be embedded into a space formed by a lower housing 2b-1 and an upper housing 2b-2. However, a method of embedding the battery cell unit 2a is not limited by FIG. 11.

In addition, the term 'electrically connected,' used in the present specification, may refer to a state in which an electric circuit is formed when connected objects are connected by a connecting means, and a current may flow to each connected object. The connecting means is not particularly limited as long as electrical connection is possible, but may be direct contact between connected objects or a wire through which a current may flow. The plurality of battery cells 1 may be electrically connected to each other through a serial connection, a parallel connection, or a combination thereof.

Meanwhile, a battery cell 1 may include tabs. The battery cell 1 may specifically include a cathode tab extending from a cathode and an anode tab extending from an anode. The 'tab' may be a term that collectively refers to a cathode tab and an anode tab. The battery cell unit 2a has a structure in which cathode tabs and anode tabs corresponding to the number of included battery cells 1 each protrude. The cathode tab and the anode tab may each be electrically connected to a bus bar 2c having a slit. The cathode tab and the anode tab may be electrically connected as they are each inserted into the slit of the bus bar 2c. In addition, the battery module 2 includes an inner cover 2d-1 and an outer cover 2d-2 to cover a bus bar 2c and a battery cell unit 2a.

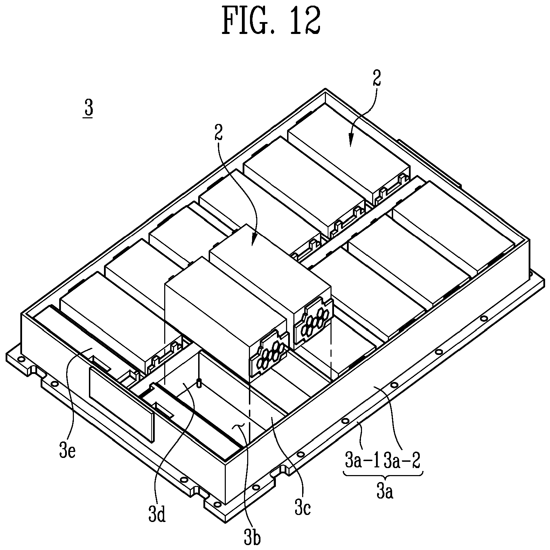

The structure of the battery pack 3 according to one embodiment of the present invention may be a known structure. For the structure of the battery pack 3, for example, FIG. 12 may be referred to. FIG. 12 shows a diagram briefly illustrating an exemplary structure of the battery pack 3. Referring to FIG. 12, the battery pack 3 is equipped with one or more battery modules 2 and electrical components 3e such as various control devices such as a battery management system (BMS) on a seating surface 3b formed inside a pack housing 3a. In addition, for the configuration of the battery pack 3, Patent Document 2 may be referred to.

The battery pack 3 may include one or more selected from the group consisting of the battery cell 1 and the battery module 2 and may include a structure equipped with various control devices and protection systems such as a BMS and a cooling device. The battery pack 3 may be composed of battery cells 1 rather than battery modules 2, and in this case, it may be referred to as a so-called cell-to-pack.

The battery pack 3 may include several components to ensure structural rigidity of a pack housing 3a. The battery pack 3 may include a cross member 3d that is formed to protrude from a tray 3a-1 of a pack housing 3a across the entire tray 3a-1 to connect opposing side wall portions 3a-2 of the pack housing 3a. In addition, the battery pack 3 may be provided with a partition wall 3c protruding from a tray 3a-1 of a pack housing 3a to connect the cross member 3d and the side wall portion 3a-2.

An electrical device according to one embodiment of the present invention may include one or more selected from the group consisting of the battery cell 1 and a battery cell assembly. The above-described electric device refers to a device that operates using power generated from a battery cell 200 or the like. The electric device may be, for example, a mobile phone, a home appliance, an electric vehicle, a hybrid vehicle, or an energy storage system (ESS).

The cathode active material according to one embodiment of the present invention may include a metal composite 10 including lithium compound particles 11, which are lithium NCM compounds doped with a first metal element and a second metal element. The first metal element may include one or more selected from the group consisting of Al, Ti, Zr, Sb, and Nb. In addition, the second metal element may include one or more selected from the group consisting of Sr, Mg, Ba, Y, and Ce. Meanwhile, in another embodiment, the second metal element may include Sr. The metal composite 10 according to one embodiment of the present invention may include lithium compound particles 11, which are lithium NCM compounds doped with a first metal element and a second metal element, and by controlling the degree of doping of the first metal element and the second metal element, the desired effect of the present application may be achieved.

The lithium compound particles 11 may include nickel (Ni). The nickel may be a metal element related to the capacity of a lithium secondary battery. The higher the nickel content in the lithium compound particles 11, the higher the capacity and output of a lithium secondary battery. However, when the nickel content is excessively increased, there is the problem that the lifespan is reduced.

In addition, the lithium compound particles 11 may include manganese (Mn). When a high content of nickel is applied for improved capacity and output, the manganese is distributed throughout the lithium compound particles 11 and may compensate for chemical and mechanical instability caused by the high content of nickel.

In addition, the lithium compound particles 11 may include cobalt (Co). The conductivity or resistance characteristics of a lithium secondary battery may be improved through the cobalt.

The cathode active material according to one embodiment of the present invention may specifically include a metal composite 10 including lithium compound particles 11 represented by the following Structural Formula 1.

[Structural Formula 1]  $Li_xNi_aCo_bMn_cM^1_dM^2_eO_{2+y}$

In Structural Formula 1, $0.95 \leq x \leq 1.10$, $0.75 \leq a < 1$, $0 < b \leq 0.2$, $0 < c \leq 0.2$, $0 < d \leq 0.15$, $0 < e \leq 0.1$, and $-0.5 \leq y \leq 0.1$, and $M^1$ is a first metal element, $M^2$ is a second metal element, and the first metal element may include one or more selected from the group consisting of Al, Ti, Zr, Sb, and Nb. In addition, the second metal element may include one or more selected from the group consisting of Sr, Mg, Ba, Y, and Ce. Meanwhile, in another embodiment, the second metal element may include Sr.

In Structural Formula 1, $M^1$ and $M^2$ may each independently include one or more metal elements. For example, $M^1$ may include Al and Ti, and $M^2$ may include Sr. According to this, Structural Formula 1 is derived as $Li_xNi_aCo_bMn_cAl_{d1}Ti_{d2}Sr_eO_{2+y}$, In addition, in Structural Formula 1, d and e refer to the sum of the bases of all included metal elements. For example, in the above example, d may mean d1+d2.

In the cathode active material according to one embodiment of the present invention, when the metal composite 10 includes the lithium compound particles 11 represented by the Structural Formula 1, excellent structural stability and lifespan retention rate may be ensured even in a high-temperature environment in which a battery is operating.

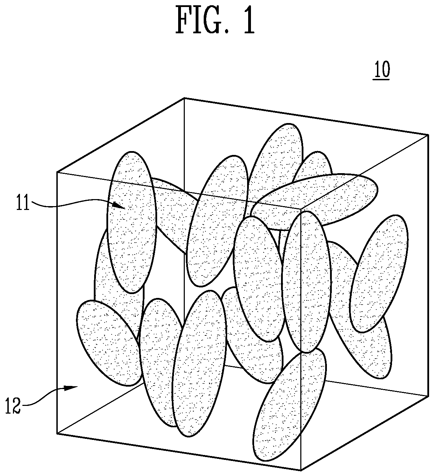

FIG. 1 shows a diagram illustrating a metal composite 10 according to one embodiment of the present invention. Referring to FIG. 1, the metal composite 10 may include one or more lithium compound particles 11. The lithium compound particles 11 may be grains. In addition, the metal composite 10 may have a structure formed by agglomerating one or more lithium compound particles 11. In the present invention, the lithium compound particles 11 may be said to be primary particles, and the metal composite 10 may be said to be secondary particles formed by agglomerating the primary particles.

Meanwhile, the metal composite 10 may be formed only of the lithium compound particles 11. In addition, the metal composite 10 may include lithium compound particles 11 and an extra-particle region 12 between the lithium compound particles 11. The extra-particle region 12 may be a void or may be filled with another material. The extra-particle region 12 may include grain boundaries.

In addition, the extra-particle region 12 may include by-products. The metal composite 10 may include by-products generated by external air or moisture on the surface of the lithium compound particles 11 or the metal composite 10 itself. The by-products may be distributed in the extra-particle region 12, and the by-products may include one or more selected from the group consisting of oxides, sulfides, sulfur oxides, fluoroxides, and hydrates of metal elements. Due to the by-products, a phase transition (for example, a phase transition by a reaction between nickel ions and an electrolyte solution) may occur in a surface layer portion of the metal composite 10 or lithium compound particles 11, and a crystal structure may be denatured.

In addition, the extra-particle region 12 may include one or more selected from the group consisting of oxides, sulfides, sulfur oxides, fluoroxides, and hydrates of metal elements doped into the lithium compound particles 11. Here, the doped metal may include one or more metal elements selected from the group consisting of a first metal element and a second metal element.

In addition, the extra-particle region 12 may include one or more selected from the group consisting of oxides, sulfides, sulfur oxides, fluoroxides, and hydrates of a first metal element, which is one of the metal elements doped into the lithium compound particles 11.

In the cathode active material according to one embodiment of the present invention, the mean particle diameter (D50) of the metal composite 10 may be in the range of 2 $\mu$m to 25 $\mu$m or 3 $\mu$m to 18 $\mu$m. The term 'mean particle diameter,' used in the present specification, may refer to the D50 particle diameter, which may refer to the particle diameter measured with Malvern's MASTERSIZER3000 equipment in accordance with the ISO-13320 standard. Distilled water was used as a solvent during measurement. The incident laser is scattered by the measurement objects dispersed in the solvent, and the values of the intensity and directionality of the scattered laser vary depending on the size of the measurement objects. By analyzing these using Mie theory, the D50 particle size may be obtained.

In the cathode active material according to one embodiment of the present invention, the lithium compound particles 11 may include a first metal element in an amount of 0.001 mole or more, 0.0011 mole or more, 0.0012 mole or more, 0.0013 mole or more, 0.0014 mole or more, 0.0015 mol or more, 0.0016 mol or more, 0.0017 mol or more, or 0.0018 mol or more, or 0.1 mol or less, 0.09 mol or less, 0.08 mol or less, 0.07 mol or less, 0.06 mol or less, 0.05 mol or less, 0.04 mol or less, or 0.03 mol based on 1 mole of the total lithium element. In addition, the lithium compound particles 11 may include a first metal element within a range formed by appropriately selecting the above-described upper and lower limits. In the above, the total lithium element refers to the total lithium element included in the lithium compound particles 11.

In the cathode active material according to one embodiment of the present invention, when the lithium compound particles 11 include a first metal element within the above-described range, excellent structural stability and lifespan retention rate may be ensured even in a high-temperature environment where a battery is operating.

In the cathode active material according to one embodiment of the present invention, the lithium compound particles 11 may include a second metal element in an amount of 0.0001 mol or more, 0.0002 mol or more, or 0.0003 mol or more, or 0.05 mol or less, 0.04 mole or less, or 0.03 mole or less based on 1 mole of the total lithium element. In addition, the lithium compound particles 11 may include a second metal element within a range formed by appropriately selecting the above-described upper and lower limits. In the above, the total lithium element refers to the total lithium element included in the lithium compound particles 11.

In the cathode active material according to one embodiment of the present invention, when the lithium compound particles 11 include a second metal element within the above-described range, excellent structural stability and lifespan retention rate may be ensured even in a high-temperature environment where a battery is operating.

When the total number of moles of lithium metal in the lithium compound particle 11 and the number of moles of a specific metal element when the total number of moles of lithium metal is assumed to be 1 mole may be obtained according to the <Method of measuring physical properties> below, and specifically, it may be derived through an inductively coupled plasma optical emission spectrometry (ICP-OES) analysis.

In the cathode active material according to one embodiment of the present invention, in the lithium compound particles 11, a first metal element may include Al. In addition, in the lithium compound particle 11, a first metal element may include Al and may further include one or more selected from the group consisting of Ti, Zr, Sb, and Nb.

When a first metal element in the lithium compound particles 11 includes Al, excellent structural stability and lifespan retention rate may be ensured even in a high-temperature environment where a battery is operating.

In the cathode active material according to one embodiment of the present invention, $R_1$ according to Mathematical Formula 1 below may be 0.6 or more, 0.61 or more, 0.62 or more, 0.63 or more, 0.64 or more, 0.65 or more, 0.66 or more, 0.67 or more, 0.68 or more, 0.69 or more, 0.7 or more, 0.71 or more, 0.72 or more, 0.73 or more, 0.74 or more, 0.75 or more, 0.76 or more, 0.77 or more, 0.78 or more, 0.79 or more, 0.8 or more, 0.81 or more, 0.82 or more, 0.83 or more, 0.84 or more, or 0.85 or more, or 1 or less, 0.99 or less, 0.98 or less, 0.97 or less, 0.96 or less, 0.95 or less, 0.94 or less, 0.93 or less, 0.92 or less, 0.91 or less, or 0.9 or less. In addition, in the cathode active material, $R_1$ according to Mathematical Formula 1 below may be within a range formed by appropriately selecting the above-described upper and lower limits.

[Mathematical Formula 1]

$$R_1 = M_1/A$$

In Mathematical Formula 1, $M_1$ is the percentage by atoms of the first metal element in the lithium compound particles 11, and A is the percentage by atoms of the first metal element in the metal composite 10.

When the cathode active material according to one embodiment of the present invention has $R_1$ according to the above Mathematical Formula 1 that satisfies the above-described range, excellent structural stability and lifespan retention rate may be ensured even in a high-temperature environment where a battery is operating.

In the above Mathematical Formula 1, the percentage by atoms of the first metal element in the lithium compound particles 11 and the percentage by atoms of the first metal element in the metal composite 10 may be obtained according to the <Method of measuring physical properties> below. The percentage by atoms of each of the first metal elements may be derived through three-dimensional Atom Probe Tomography (APT).

In the cathode active material according to one embodiment of the present invention, $R_2$ according to Mathematical Formula 2 below may be 0.05 or more, 0.052 or more, 0.054 or more, 0.056 or more, 0.058 or more, 0.06 or more, 0.062 or more, 0.064 or more, 0.066 or more, 0.068 or more, or 0.07 or more, or 0.8 or less, 0.79 or less, 0.78 or less, 0.77 or less, 0.76 or less, or 0.75 or less. In addition, in the cathode active material, $R_2$ according to Mathematical Formula 2 below may be within a range formed by appropriately selecting the above-described upper and lower limits.

[Mathematical Formula 2]

$$R_2 = W_B/W_A$$

In Mathematical Formula 2, $W_B$ is the percentage by weight of a second metal element based on the total weight of the metal composite 10, and $W_A$ is the percentage by weight of a first metal element based on the total weight of the metal composite 10.

When the cathode active material according to one embodiment of the present invention has $R_2$ according to the above Mathematical Formula 2 that satisfies the above-described range, excellent structural stability and lifespan retention rate may be ensured even in a high-temperature environment where a battery is operating. In other words, the metal composite 10 according to one embodiment of the present invention dopes a lithium NCM compound with a first metal element and a second metal element, and by controlling to an appropriate proportion, excellent structural stability and lifespan retention rate may be ensured even in a high-temperature environment where a battery is operating.

The percentage by weight of a first metal element and the percentage by weight of a second metal element based on the total weight of the metal composite 10 may be obtained according to the <Method of measuring physical properties> below. The percentage by weight of each metal element may be derived through an ICP analysis.

For the ICP analysis method used in the present invention, inductively coupled plasma-optical emission spectrometer (ICP-OES), inductively coupled plasma-atomic emission spectrometer (ICP-AES), inductively coupled plasma-mass spectrometer (ICP-MS) or inductively coupled plasma-atomic absorption spectrometer (ICP-AAS) may be used depending on the appropriate situation, and considering the measurement target, ICP-OES may be preferably used for the analysis.

In the cathode active material according to one embodiment of the present invention, $R_P$ according to Mathematical Formula P below may be 0.1 or more, 0.2 or more, 0.3 or more, 0.4 or more, 0.5 or more, 0.6 or more, 0.7 or more, 0.8 or more, 0.9 or more, 1 or more, or 1.1 or more, or 10,000 or less, 9,500 or less, 9,000 or less, 8,500 or less, or 8,200 or less. In addition, in the cathode active material, $R_P$ according to Mathematical Formula P below may be within a range formed by appropriately selecting the above-described upper and lower limits.

[Mathematical Formula P]

$$R_P = N_{Al}/N_{M1}$$

In Mathematical Formula P, $N_{Al}$ is the percentage by mole of Al based on the total number of moles of the metal composite 10, and $N_{M1}$ is the combined percentage by mole of Ti, Zr, Sb, and Nb based on the total number of moles of the metal composite 10.

When the cathode active material according to one embodiment of the present invention has $R_p$ according to the above Mathematical Formula P that satisfies the above-described range, excellent structural stability and lifespan retention rate may be ensured even in a high-temperature environment where a battery is operating.

In the cathode active material according to one embodiment of the present invention, a first metal element in the lithium compound particles 11 may include Al and Ti. In this case, in the cathode active material, $R_Q$ according to the following Mathematical Formula Q may be 1,000 or more, 1,100 or more, 1,200 or more, 1,300 or more, 1,400 or more, or 1,500 or more, or 10,000 or less, 9,500 or less, 9,000 or less, 8,500 or less, or 8,200 or less. In addition, in the cathode active material, $R_Q$ according to Mathematical Formula Q below may be within a range formed by appropriately selecting the above-described upper and lower limits.

[Mathematical Formula Q]

$$R_Q = N_{Al}/N_{Ti}$$

In Mathematical Formula Q, $N_{Al}$ is the percentage by mole of Al based on the total number of moles of the metal composite 10, and $N_{Ti}$ is the percentage by mole of Ti based on the total number of moles of the metal composite 10.

In the cathode active material according to one embodiment of the present invention, when the lithium compound particles 11 include Al and Ti as a first metal element and $R_Q$ according to the above Mathematical Formula Q satisfies the above-described range, excellent structural stability and lifespan retention rate may be ensured even in a high-temperature environment where a battery is operating.

In the cathode active material according to one embodiment of the present invention, a first metal element in the lithium compound particles 11 may include Al and Zr. In this case, in the cathode active material, $R_R$ according to the following Mathematical Formula R may be 0.1 or more, 0.2 or more, 0.3 or more, 0.4 or more, 0.5 or more, 0.6 or more, 0.7 or more, 0.8 or more, 0.9 or more, 1 or more, 1.1 or more, or 1.2 or more, or 50 or less, 45 or less, 40 or less, 35 or less, 30 or less, 25 or less, 20 or less, 15 or less, or 12 or less. In addition, in the cathode active material, $R_R$ according to Mathematical Formula R below may be within a range formed by appropriately selecting the above-described upper and lower limits.

[Mathematical Formula R]

$$R_R = N_{Al}/N_{Zr}$$

In Mathematical Formula R, $N_{Al}$ is the percentage by mole of Al based on the total number of moles of the metal composite 10, and $N_{Zr}$ is the percentage by mole of Zr based on the total number of moles of the metal composite 10.

In the cathode active material according to one embodiment of the present invention, when the lithium compound particles 11 include Al and Zr as a first metal element and $R_R$ according to the above Mathematical Formula R satisfies the above-described range, excellent structural stability and lifespan retention rate may be ensured even in a high-temperature environment where a battery is operating.

In the cathode active material according to one embodiment of the present invention, a first metal element in the lithium compound particles 11 may include Al and Sb. In this case, in the cathode active material, $R_S$ according to the following Mathematical Formula S may be 1 or more, 2 or more, 3 or more, 4 or more, 5 or more, 6 or more, 7 or more, 8 or more, 9 or more, 10 or more, 11 or more, 12 or more, or 13 or more, or 100 or less, 90 or less, 80 or less, 70 or less, 60 or less, 50 or less, 40 or less, 30 or less, or 20 or less. In addition, in the cathode active material, $R_S$ according to Mathematical Formula S below may be within a range formed by appropriately selecting the above-described upper and lower limits.

## [Mathematical Formula S]

$$R_S = N_{Al}/N_{Sb}$$

In Mathematical Formula S, $N_{Al}$ is the percentage by mole of Al based on the total number of moles of the metal composite 10, and $N_{Sb}$ is the percentage by mole of Sb based on the total number of moles of the metal composite 10.

In the cathode active material according to one embodiment of the present invention, when the lithium compound particles 11 include Al and Sb as a first metal element and $R_S$ according to the above Mathematical Formula S satisfies the above-described range, excellent structural stability and lifespan retention rate may be ensured even in a high-temperature environment where a battery is operating.

In the cathode active material according to one embodiment of the present invention, a first metal element in the lithium compound particles 11 may include Al and Nb. In this case, in the cathode active material, $R_T$ according to the following Mathematical Formula T may be 1 or more, 2 or more, 3 or more, 4 or more, 5 or more, or 6 or more, or 50 or less, 45 or less, 40 or less, 35 or less, 30 or less, 25 or less, 20 or less, 15 or less, or 10 or less. In addition, in the cathode active material, $R_T$ according to Mathematical Formula T below may be within a range formed by appropriately selecting the above-described upper and lower limits.

## [Mathematical Formula T]

$$R_T = N_{Al}/N_{Nb}$$

In Mathematical Formula T, $N_{Al}$ is the percentage by mole of Al based on the total number of moles of the metal composite 10, and $N_{Nb}$ is the percentage by mole of Nb based on the total number of moles of the metal composite 10.

In the cathode active material according to one embodiment of the present invention, when the lithium compound particles 11 include Al and Nb as a first metal element and $R_T$ according to the above Mathematical Formula T satisfies the above-described range, excellent structural stability and lifespan retention rate may be ensured even in a high-temperature environment where a battery is operating.

The percentage by mole of a specific metal element based on the total number of moles of the metal composite 10 may be obtained according to the <Method of measuring physical properties> below. The percentage by mole of a specific metal element based on the total number of moles of the metal composite 10 may be derived through an ICP-OES analysis.

A method of preparing a metal composite 10 according to one embodiment of the present invention may include preparing a precursor of a metal composite with a dispersion including a nickel compound, a cobalt compound, and a manganese compound

The nickel compound, cobalt compound, and manganese compound may be materials for forming the lithium compound particles 11. The nickel compound may be nickel sulfate or the like, the cobalt compound may be cobalt sulfate or the like, and the manganese compound may be manganese sulfate or the like.

The term dispersion used in the present application refers to a mixture in which a solute is dispersed without being dissolved in a specific solvent.

In the method of preparing the metal composite 10 according to one embodiment of the present invention, the preparing a precursor of the metal composite may include subjecting the dispersion to a reaction in a basic environment. The basic environment may be formed of a basic material, and the pH measured at room temperature may be about 9 or more, 10 or more, or 12 or less or 11.5 or less. As the basic material, a material that has little physical or chemical effect on the dispersion may be used, and for example, an alkaline material such as sodium hydroxide or potassium hydroxide may be used.

In addition, the method of preparing a metal composite 10 may include calcining a mixture including one or more of the prepared precursor of the metal composite, a lithium compound, and a second compound including a second metal element.

The lithium compound may be a material for forming the lithium compound particles 11. The lithium compound may be lithium hydroxide or the like. The second metal element may include one or more selected from the group consisting of Sr, Mg, Ba, Y, and Ce. Meanwhile, in another embodiment, the second metal element may include Sr. The second compound may be an oxide or hydroxide of the second metal element.

In addition, in the method of preparing the metal composite 10, at least one selected from the group consisting of the dispersion and the mixture may include one or more types of a first compound including a first metal element. Here, the first metal element may include one or more selected from the group consisting of Al, Ti, Zr, Sb, and Nb. The first compound may be an oxide or hydroxide of the first metal element.

In the method of preparing the metal composite 10 according to one embodiment of the present invention, the calcining may include temperature raising in which the temperature is raised from room temperature to a final temperature in the range of 650 °C to 750 °C at a temperature raising rate of 1 °C/min to 8 °C/min. The temperature raising rate may be in the range of 1.5 °C/min to 7 °C/min, or in the range of 2 °C/min to 6 °C/min. In the method of preparing the metal composite 10, the metal composite 10 targeted in the present invention may be obtained based on the above-described materials and the conditions of the calcining. In particular, when the temperature raising rate within the calcining is outside the above-described range, the metal composite 10 targeted in the present invention may not be obtained.

In the method of preparing the metal composite 10 according to one embodiment of the present invention, the calcining the mixture (the calcining step) may further include thermally treating in the range of 5 to 20 hours while maintaining the final temperature. When the thermal treatment time is within the above-described range, the metal composite 10 targeted in the present invention may be obtained.

In the method of preparing the metal composite 10 according to one embodiment of the present invention, the calcining the mixture (the calcining step) may be performed in an environment where oxygen ($O_2$) gas passes. In addition, in the method of preparing the metal composite 10 according to one embodiment of the present invention, in the calcining the mixture (the calcining step), oxygen gas may be passed at a flow rate in the range of 1 mL/min to 50 mL/min. As described above, when oxygen gas having a flow rate within a specific range passes in the calcining, the metal composite 10 targeted in the present invention may be obtained.

Hereinafter, the present invention will be described in more detail based on examples and comparative examples. However, the following examples and comparative examples are only examples to explain the present disclosure in more detail, and the present disclosure is not limited by the following examples and comparative examples.

## 1. Preparation of metal composite

### Example 1.

$NiSO_4 \cdot 6H_2O$ (A), $CoSO_4 \cdot 7H_2O$ (B), $MnSO_4 \cdot H_2O$ (C), and $Al_2(SO_4)_3$ (D) were added to a reactor at a molar ratio of 93:3:3:0.5 (A:B:C:D). Distilled water was added to the reactor, and the materials were dispersed to prepare a transition metal dispersion. The distilled water was bubbled with nitrogen gas ($N_2$) for about 24 hours to remove dissolved oxygen therein for later use.

The prepared transition metal dispersion, a sodium hydroxide (NaOH) aqueous solution, and aqueous ammonia were each added to another reactor at an appropriate input rate to adjust the pH to about 10.5, and a coprecipitation reaction was performed while stirring the resulting mixture at a constant rate. The temperature during the reaction was maintained at about 60 °C, and the coprecipitation reaction was performed for about 48 hours. After the coprecipitation reaction was completed, a precipitate was prepared from which $Na^+$ and $SO_4^{2-}$ were removed through a filtration device. Thereafter, the precipitate was dried in an oven at about 120 °C for about 10 hours to prepare a metal composite precursor.

Lithium hydroxide and the precursor of the metal composite prepared above were added to a dry high-speed mixer at a molar ratio of 1.04:1 (lithium hydroxide:precursor of the metal composite). In addition, strontium hydroxide ($Sr(OH)_2$) was added to the dry high-speed mixer at a rate of about 0.11% by mole based on the total number of moles ($N_{T1}$), which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 680 °C at a temperature raising rate of 5 °C/min in an environment where oxygen gas ($O_2$) passed at a flow rate of 10 mL/min, and thermally treated (calcined) for 10 hours while maintaining the temperature at 680 °C. After the thermal treatment (calcining) was completed, the thermally treated mixture was naturally cooled to room temperature and subjected to pulverization and classification to prepare a metal composite including lithium compound particles having the chemical formula of $Li_{1.04}Ni_{0.93}Co_{0.03}Mn_{0.03}Al_{0.01}S1_{0.0011}O_{1.53}$.

### Example 2.

A precursor of the metal composite was prepared by the same method as Example 1, except that $NiSO_4 6H_2O$ (A), $CoSO_4 7H_2O$ (B), and $MnSO_4 H_2O$ (C) were added to the reactor at a mole ratio of 93:3:2 (A:B:C).

Lithium hydroxide, the precursor of the metal composite prepared above, and aluminum hydroxide ($Al(OH)_3$) were added to a dry high-speed mixer at a molar ratio of 1.02:1:0.02 (lithium hydroxide:precursor of the metal composite: aluminum hydroxide). In addition, strontium hydroxide ($Sr(OH)_2$) was added to the dry high-speed mixer at a rate of about 0.11% by mole based on the total number of moles ($N_{T1}+N_2$), which is the sum of the number of moles of all metal elements included in the precursor of the metal composite ($N_{T1}$) and the number of moles of aluminum in the aluminum hydroxide ($N_2$). Thereafter, the additives were mixed homogeneously for about 5 minutes using the dry high-speed mixer to prepare a mixture.

The mixture was placed in a calcining furnace. The mixture placed in the calcining furnace was heated from room temperature to 690 °C at a temperature raising rate of 2 °C/min in an environment where oxygen gas passed at a flow rate of 10 mL/min, and thermally treated (calcined) for 10 hours while maintaining the temperature at 690 °C. After the thermal treatment (calcining) was completed, the thermally treated mixture was naturally cooled to room temperature and subjected to pulverization and classification to prepare a metal composite including lithium compound particles having the chemical formula of $Li_{1.02}Ni_{0.93}Co_{0.03}Mn_{0.02}Al_{0.02}Sr_{0.0011}O_{1.52}$.

**Example 3.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 95:3:2:0.09 (A:B:C:D).

Lithium hydroxide and the precursor of the metal composite prepared above were added to a dry high-speed mixer at a molar ratio of 1.07:1 (lithium hydroxide:precursor of the metal composite). In addition, strontium hydroxide $(Sr(OH)_2)$ was added to the dry high-speed mixer at a rate of about 0.11% by mole based on the total number of moles $(N_{T1})$, which is the sum of the number of moles of all metal elements included in the precursor of the metal composite. In addition, zirconium oxide $(ZrO_2)$ was further added to the dry high-speed mixer at a rate of about 0.164% by mole based on the total number of moles $(N_{T1})$, which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 690 °C at a temperature raising rate of 2 °C/min in an environment where oxygen gas passed at a flow rate of 10 mL/min, and thermally treated (calcined) for 10 hours while maintaining the temperature at 690 °C. After the thermal treatment (calcining) was completed, the thermally treated mixture was naturally cooled to room temperature and subjected to pulverization and classification to prepare a metal composite including lithium compound particles having the chemical formula of $Li_{1.07}Ni_{0.93}Co_{0.03}Mn_{0.02}Al_{0.002}Zr_{0.0016}Sr_{0.001}O_{1.53}$.

**Example 4.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 94:3:0.44:1.16 (A:B:C:D).

Lithium hydroxide and the precursor of the metal composite prepared above were added to a dry high-speed mixer at a molar ratio of 1.10:1 (lithium hydroxide:precursor of the metal composite). In addition, strontium hydroxide $(Sr(OH)_2)$ was added to the dry high-speed mixer at a rate of about 0.24% by mole based on the total number of moles $(N_{T1})$, which is the sum of the number of moles of all metal elements included in the precursor of the metal composite. In addition, titanium oxide $(TiO_2)$ was further added to the dry high-speed mixer at a rate of about 0.0007% by mole based on the total number of moles $(N_{T1})$, which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 690 °C at a temperature raising rate of 2 °C/min in an environment where oxygen gas passed at a flow rate of 10 mL/min, and thermally treated (calcined) for 10 hours while maintaining the temperature at 690 °C. After the thermal treatment (calcining) was completed, the thermally treated mixture was naturally cooled to room temperature and subjected to pulverization and classification to prepare a metal composite including lithium compound particles having the chemical formula of $Li_{1.07}N1_{0.94}Co_{0.03}Mn_{0.0044}Al_{0.023}Ti_{0.0000072}Sr_{0.0024}O_{1.56}$.

**Example 5.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) 89:5:4:0.5(A:B:C:D) were added to the reactor at a mole ratio of 89:5:4:0.5 (A:B:C:D).

Lithium hydroxide and the precursor of the metal composite prepared above were added to a dry high-speed mixer at a molar ratio of 1.01:1 (lithium hydroxide:precursor of the metal composite). In addition, strontium hydroxide $(Sr(OH)_2)$ was added to the dry high-speed mixer at a rate of about 0.17% by mole based on the total number of moles $(N_{T1})$, which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.01}Ni_{0.80}C0_{0.05}Mn_{0.04}Al_{0.010}Sr_{0.0017}O_{1.51}$.

Example 6.

A precursor of the metal composite was prepared by the same method as Example 1, except that $NiSO_46H_2O$ (A), $CoSO_47H_2O$ (B), and $MnSO_4H_2O$ (C) were added to the reactor at a mole ratio of 89:5:4 (A:B:C).

Lithium hydroxide, the precursor of the metal composite prepared above, and aluminum hydroxide $(Al(OH)_3)$ were added to a dry high-speed mixer at a molar ratio of 1.03:1:0.006 (lithium hydroxide:precursor of the metal composite:aluminum hydroxide). In addition, strontium hydroxide $(Sr(OH)_2)$ was added to the dry high-speed mixer at a rate of about 0.11% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 710 °C at a temperature raising rate of 2 °C/min in an environment where oxygen gas passed at a flow rate of 10 mL/min, and thermally treated (calcined) for 10 hours while maintaining the temperature at 710 °C. After the thermal treatment (calcining) was completed, the thermally treated mixture was naturally cooled to room temperature and subjected to pulverization and classification to prepare a metal composite including lithium compound particles having the chemical formula of $Li_{1.03}Ni_{0.89}C0_{0.05}Mn_{0.05}Al_{0.004}S1_{0.001}O_{1.52}$.

**Example 7.**

A precursor of the metal composite was prepared by the same method as Example 1, except that $NiSO_46H_2O$ (A), $CoSO_47H_2O$ (B), and $MnSO_4H_2O$ (C) were added to the reactor at a mole ratio of 89:5:5 (A:B:C).

Lithium hydroxide, the precursor of the metal composite prepared above, and aluminum hydroxide $(Al(OH)_3)$ were added to a dry high-speed mixer at a molar ratio of 1.03:1:0.012 (lithium hydroxide:precursor of the metal composite:aluminum hydroxide). In addition, strontium hydroxide $(Sr(OH)_2)$ was added to the dry high-speed mixer at a rate of about 0.17% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 710 °C at a temperature raising rate of 2 °C/min in an environment where oxygen gas passed at a flow rate of 10 mL/min, and thermally treated (calcined) for 10 hours while maintaining the temperature at 710 °C. After the thermal treatment (calcining) was completed, the thermally treated mixture was naturally cooled to room temperature and subjected to pulverization and classification to prepare a metal composite including lithium compound particles having the chemical formula of $Li_{1.03}Ni_{0.89}Co_{0.05}Mn_{0.05}Al_{0.009}Sr_{0.0017}O_{1.52}$.

**Example 8.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 89:5:4:0.375 (A:B:C:D).

Lithium hydroxide, the precursor of the metal composite prepared above, and aluminum hydroxide $(Al(OH)_3)$ were added to a dry high-speed mixer at a molar ratio of 1.01:1:0.0075 (lithium hydroxide:precursor of the metal composite:aluminum hydroxide). In addition, strontium hydroxide $(Sr(OH)_2)$ was added to the dry high-speed mixer at a rate of about 0.17% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.01}Ni_{0.89}Co_{0.05}Mn_{0.04}Al_{0.0144}Sr_{0.0017}O_{1.51}$.

**Example 9.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 89:5:4:0.273 (A:B:C:D).

Lithium hydroxide, the precursor of the metal composite prepared above, and aluminum hydroxide ($Al(OH)_3$) were added to a dry high-speed mixer at a molar ratio of 1.01:1:0.0055 (lithium hydroxide:precursor of the metal composite:aluminum hydroxide). In addition, strontium hydroxide ($Sr(OH)_2$) was added to the dry high-speed mixer at a rate of about 0.22% by mole based on the total number of moles ($N_{T1}+N_2$), which is the sum of the number of moles of all metal elements included in the precursor of the metal composite ($N_{T1}$) and the number of moles of aluminum in the aluminum hydroxide ($N_2$). Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.01}Ni_{0.94}Co_{0.05}Mn_{0.04}Al_{0.0104}Sr_{0.0022}O_{1.51}$.

**Example 10.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 88:5:4:1.05 (A:B:C:D).

Lithium hydroxide and the precursor of the metal composite prepared above were added to a dry high-speed mixer at a molar ratio of 0.97:1 (lithium hydroxide:precursor of the metal composite). In addition, strontium hydroxide ($Sr(OH)_2$) was added to the dry high-speed mixer at a rate of about 0.27% by mole based on the total number of moles ($N_{T1}$), which is the sum of the number of moles of all metal elements included in the precursor of the metal composite. In addition, zirconium oxide ($ZrO_2$) was further added to the dry high-speed mixer at a rate of about 0.211% by mole based on the total number of moles ($N_{T1}$), which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{0.97}Ni_{0.88}Co_{0.05}Mn_{0.04}Al_{0.020}Zr_{0.0021}Sr_{0.0027}O_{1.5}$.

**Example 11.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 88:5:3:1.4 (A:B:C:D).

Lithium hydroxide and the precursor of the metal composite prepared above were added to a dry high-speed mixer at a molar ratio of 1.05:1 (lithium hydroxide:precursor of the metal composite). In addition, strontium hydroxide ($Sr(OH)_2$) was added to the dry high-speed mixer at a rate of about 0.34% by mole based on the total number of moles ($N_{T1}$), which is the sum of the number of moles of all metal elements included in the precursor of the metal composite. In addition, antimony hydroxide ($Sb(OH)_2$) was further added to the dry high-speed mixer at a rate of about 0.20% by mole based on the total number of moles ($N_{T1}$), which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.05}Ni_{0.88}Co_{0.05}Mn_{0.03}Al_{0.024}Sb_{0.0020}Sr_{0.0034}O_{1.53}$.

**Example 12.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 89:5:4:0.55 (A:B:C:D).

Lithium hydroxide and the precursor of the metal composite prepared above were added to a dry high-speed mixer at a molar ratio of 1.03:1 (lithium hydroxide:precursor of the metal composite). In addition, strontium hydroxide $(Sr(OH)_2)$ was added to the dry high-speed mixer at a rate of about 0.22% by mole based on the total number of moles $(N_{T1})$, which is the sum of the number of moles of all metal elements included in the precursor of the metal composite. In addition, titanium hydroxide $(TiO_2)$ was further added to the dry high-speed mixer at a rate of about 0.0007% by mole based on the total number of moles $(N_{T1})$, which is the sum of the number of moles of all metal elements included in the precursor of the metal composite. Thereafter, the additives were mixed homogeneously for about 5 minutes using the dry high-speed mixer to prepare a mixture.

The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.03}Ni_{0.89}C_{0.05}Mn_{0.04}Al_{0.0094}Ti_{0.000007}Sr_{0.022}O_{1.52}$.

**Example 13.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 81:8:9:0.543 (A:B:C:D).

Lithium hydroxide, the precursor of the metal composite prepared above, and aluminum hydroxide $(Al(OH)_3)$ were added to a dry high-speed mixer at a molar ratio of 0.99:1:0.0109 (lithium hydroxide:precursor of the metal composite:aluminum hydroxide). In addition, strontium hydroxide $(Sr(OH)_2)$ was added to the dry high-speed mixer at a rate of about 0.52% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 730 °C at a temperature raising rate of 5 °C/min in an environment where oxygen gas passed at a flow rate of 10 mL/min, and thermally treated (calcined) for 10 hours while maintaining the temperature at 730 °C. After the thermal treatment (calcining) was completed, the thermally treated mixture was naturally cooled to room temperature and subjected to pulverization and classification to prepare a metal composite including lithium compound particles having the chemical formula of $Li_{0.99}Ni_{0.81}Co_{0.08}Mn_{0.09}Al_{0.0146}Sr_{0.0052}O_{1.5}$.

**Example 14.**

A precursor of the metal composite was prepared by the same method as Example 1, except that $NiSO_46H_2O$ (A), $CoSO_47H_2O$ (B), $MnSO_4H_2O$ (C), and $Al_2(SO_4)_3$ (D) were added to the reactor at a mole ratio of 81:8:9:0.21 (A:B:C:D).

Lithium hydroxide, the precursor of the metal composite prepared above, and aluminum hydroxide $(Al(OH)_3)$ were added to a dry high-speed mixer at a molar ratio of 1.02:1:0.00105 (lithium hydroxide:precursor of the metal composite:aluminum hydroxide). In addition, strontium hydroxide $(Sr(OH)_2)$ was added to the dry high-speed mixer at a rate of about 0.49% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. In addition, zirconium oxide $(ZrO_2)$ was further added to the dry high-speed mixer at a rate of about 0.22% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 730 °C at a temperature raising rate of 5 °C/min in an environment where oxygen gas passed at a flow rate of 10 mL/min, and thermally treated (calcined) for 10 hours while maintaining the temperature at 730 °C. After the thermal treatment (calcining) was completed, the thermally treated mixture was naturally cooled to room temperature and subjected to pulverization and classification to prepare a metal composite including lithium compound particles having the chemical formula of $Li_{1.02}Ni_{0.81}Co_{0.08}Mn_{0.09}Al_{0.0057}Zr_{0.0022}Sr_{0.0049}O_{1.51}$.

**Example 15.**

A precursor of the metal composite was prepared by the same method as Example 1, except that $NiSO_4 6H_2O$ (A), $CoSO_4 7H_2O$ (B), $MnSO_4 H_2O$ (C), and $Al_2(SO_4)_3$ (D) were added to the reactor at a mole ratio of 81:8:9:0.185 (A:B:C:D).

Lithium hydroxide, the precursor of the metal composite prepared above, and aluminum hydroxide $(Al(OH)_3)$ were added to a dry high-speed mixer at a molar ratio of 1:1:0.0037 (lithium hydroxide:precursor of the metal composite: aluminum hydroxide). In addition, strontium hydroxide $(Sr(OH)_2)$ was added to the dry high-speed mixer at a rate of about 0.47% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. In addition, niobium hydroxide $(Nb(OH)_3)$ was further added to the dry high-speed mixer at a rate of about 0.108% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 730 °C at a temperature raising rate of 5 °C/min in an environment where oxygen gas passed at a flow rate of 10 mL/min, and thermally treated (calcined) for 10 hours while maintaining the temperature at 730°C. After the thermal treatment (calcining) was completed, the thermally treated mixture was naturally cooled to room temperature and subjected to pulverization and classification to prepare a metal composite including lithium compound particles having the chemical formula of $LiNi_{0.81}Co_{0.08}Mn_{0.09}Al_{0.047}Nb_{0.00108}Sr_{0.0047}O_{1.5}$.

**Example 16.**

A precursor of the metal composite was prepared by the same method as Example 1, except that $NiSO_4 6H_2O$ (A), $CoSO_4 7H_2O$ (B), $MnSO_4 H_2O$ (C), and $Al_2(SO_4)_3$ (D) were added to the reactor at a mole ratio of 79:9:9:0.8125 (A:B:C:D).

Lithium hydroxide, the precursor of the metal composite prepared above, and aluminum hydroxide $(Al(OH)_3)$ were added to a dry high-speed mixer at a molar ratio of 1:1:0.01625 (lithium hydroxide:precursor of the metal composite: aluminum hydroxide). In addition, strontium hydroxide $(Sr(OH)_2)$ was added to the dry high-speed mixer at a rate of about 0.77% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. In addition, titanium oxide $(TiO_2)$ was further added to the dry high-speed mixer at a rate of about 0.0004% by mole based on the total number of moles $(N_{T1}+N_2)$, which is the sum of the number of moles of all metal elements included in the precursor of the metal composite $(N_{T1})$ and the number of moles of aluminum in the aluminum hydroxide $(N_2)$. Thereafter, the additives were mixed homogeneously for about 5 minutes using the dry high-speed mixer to prepare a mixture.

The mixture was placed in a calcining furnace. The mixture placed in the calcining furnace was heated from room temperature to 730 °C at a temperature raising rate of 5 °C/min in an environment where oxygen gas passed at a flow rate of 10 mL/min, and thermally treated (calcined) for 10 hours while maintaining the temperature at 730 °C. After the thermal treatment (calcining) was completed, the thermally treated mixture was naturally cooled to room temperature and subjected to pulverization and classification to prepare a metal composite including lithium compound particles having the chemical formula of $LiNi_{0.79}Co_{0.09}Mn_{0.09}Al_{0.0203}Ti_{0.000004}Sr_{0.0077}O_{1.5}$.

**Example 17.**

A precursor of the metal composite was prepared by the same method as Example 5, except that when preparing the mixture, strontium hydroxide $(Sr(OH)_2)$ was added at a ratio of about 0.03% by mole based on the total number of moles $(N_{T1})$, which is the sum of the number of moles of all metal elements included in the precursor of the metal composite. The metal composite prepared here included lithium compound particles having the chemical formula of $Li_{1.01}Ni_{0.89}Co_{0.05}Mn_{0.04}Al_{0.008}Sr_{0.0003}O_{1.5}$.

**Example 18.**

A precursor of the metal composite was prepared by the same method as Example 5, except that when preparing the mixture, strontium hydroxide ($Sr(OH)_2$) was added at a ratio of about 0.11% by mole based on the total number of moles ($N_{T1}$), which is the sum of the number of moles of all metal elements included in the precursor of the metal composite. The metal composite prepared here included lithium compound particles having the chemical formula of $Li_{1.01}Ni_{0.89}Co_{0.05}Mn_{0.04}Al_{0.009}Sr_{0.0011}O_{1.5}$.

**Example 19.**

A precursor of the metal composite was prepared by the same method as Example 5, except that when preparing the mixture, strontium hydroxide ($Sr(OH)_2$) was added at a ratio of about 0.21% by mole based on the total number of moles ($N_{T1}$), which is the sum of the number of moles of all metal elements included in the precursor of the metal composite. The metal composite prepared here included lithium compound particles having the chemical formula of $Li_{1.01}Ni_{0.89}C0_{0.05}Mn_{0.04}Al_{0.008}Sr_{0.0021}O_{1.5}$.

**Comparative Example 1.**

A precursor of the metal composite was prepared by the same method as Example 5. In addition, a mixture was prepared by the same method as Example 5.
The mixture was placed in a calcining furnace. The mixture placed in the calcining furnace was heated from room temperature to 690 °C at a temperature raising rate of 10 °C/min in an environment where oxygen gas passed at a flow rate of 10 mL/min, and thermally treated (calcined) for 10 hours while maintaining the temperature at 690°C. After the thermal treatment (calcining) was completed, the thermally treated mixture was naturally cooled to room temperature and subjected to pulverization and classification to prepare a metal composite including lithium compound particles having the chemical formula of $LiNi_{0.9}Co_{0.05}Mn_{0.05}Al_{0.0004}Sr_{0.0001}O_{1.5}$.

**Comparative Example 2.**

A precursor of the metal composite was prepared by the same method as Example 5.
Lithium hydroxide and the precursor of the metal composite prepared above were added to a dry high-speed mixer at a molar ratio of 1.01:1 (lithium hydroxide:precursor of the metal composite). Thereafter, the additives were mixed homogeneously for about 5 minutes using the dry high-speed mixer to prepare a mixture (i.e., strontium hydroxide ($Sr(OH)_2$) was not further added).
The mixture was placed in a calcining furnace. The mixture placed in the calcining furnace was heated from room temperature to 700 °C at a temperature raising rate of 5 °C/min in an environment where oxygen gas passed at a flow rate of 10 mL/min, and thermally treated (calcined) for 10 hours while maintaining the temperature at 700 °C. After the thermal treatment (calcining) was completed, the thermally treated mixture was naturally cooled to room temperature and subjected to pulverization and classification to prepare a metal composite including lithium compound particles having the chemical formula of $Li_{1.02}Ni_{0.9}Co_{0.05}Mn_{0.05}Al_{0.008}O_{1.5}$.

**Comparative Example 3.**

A precursor of the metal composite was prepared by the same method as Example 5, except that when preparing the mixture, strontium hydroxide ($Sr(OH)_2$) was added at a ratio of about 0.83% by mole based on the total number of moles ($N_{T1}$), which is the sum of the number of moles of all metal elements included in the precursor of the metal composite. The metal composite prepared here included lithium compound particles having the chemical formula of $Li_{1.01}Ni_{0.89}Co_{0.05}Mn_{0.04}Al_{0.008}Sr_{0.0083}O_{1.5}$.

**Comparative Example 4.**

A precursor of the metal composite was prepared by the same method as Example 1, except that when preparing the mixture, zirconium oxide ($ZrO_2$) was further added to the dry high-speed mixer at a ratio of about 0.164% by mole based on the total number of moles ($N_{T1}$), which is the sum of the number of moles of all metal elements included in the precursor of the metal composite. The metal composite prepared here included lithium compound particles having the chemical formula of $LiNi_{0.9}Co_{0.05}Mn_{0.05}Al_{0.0004}Zr_{0.00033}Sr_{0.0001}O_{1.5}$.

**Comparative Example 5.**

A precursor of the metal composite was prepared by the same method as Example 1, except that when preparing the mixture, antimony hydroxide ($Sb(OH)_2$) was further added to the dry high-speed mixer at a ratio of about 0.20% by mole based on the total number of moles ($N_{T1}$), which is the sum of the number of moles of all metal elements included in the precursor of the metal composite. The metal composite prepared here included lithium compound particles having the chemical formula of $LiNi_{0.9}Co_{0.05}Mn_{0.05}Al_{0.0004}Sb_{0.00078}Sr_{0.0001}O_{1.5}$.

Comparative Example 6.

A precursor of the metal composite was prepared by the same method as Example 1, except that when preparing the mixture, titanium oxide ($TiO_2$) was further added to the dry high-speed mixer at a ratio of about 0.0007% by mole based on the total number of moles ($N_{T1}$), which is the sum of the number of moles of all metal elements included in the precursor of the metal composite. The metal composite prepared here included lithium compound particles having the chemical formula of $LiNi_{0.9}Co_{0.05}Mn_{0.05}Al_{0.0004}Sr_{0.0001}Ti_{0.0000012}O_{1.5}$.

2. Manufacturing of battery cells

The metal composite (P1), conductive material (P2), and binder (P3) prepared in each of the above Examples and Comparative Examples were mixed at a weight ratio of 94:3:3 (P1:P2:P3), and an appropriate amount of solvent was added to prepare a cathode slurry composition. Here, Denka black was used as the conductive material (P2), and polyvinylidene fluoride (PVDF) was used as the binder (P3). In addition, N-methyl-2-pyrrolidone (NMP) was used as the solvent. One surface of aluminum foil having a thickness of about 12 $\mu$m was coated with the cathode slurry composition, and drying and rolling were performed to manufacture a cathode having an electrode density of 3.5 g/cc or more. Natural graphite (N1), a conductive material (N2), a binder (N3), and a thickener (N4) were mixed at a weight ratio of 93:5:1:1 (N1:N2:N3:N4), and an appropriate amount of solvent was added to prepare an anode slurry composition. Here, Denka black was used as the conductive material (N2), and styrene-butadiene rubber (SBR) was used as the binder (N3). In addition, carboxymethyl cellulose (CMC) was used as the thickener (N4), and deionized water was used as the solvent. One surface of copper foil having a thickness of about 8 $\mu$m was coated with the anode slurry composition, and drying and rolling were performed to manufacture an anode.

After performing a predetermined notching process with the cathode and the anode manufactured above and stacking the same, a separator made of a polyethylene material with a thickness of about 25 $\mu$m was interposed between the cathode and the anode to manufacture an electrode assembly. Thereafter, the electrode assembly was placed in a pouch, an electrolyte was injected, and then the pouch was sealed, and the electrode assembly was immersed in an electrolyte solution for more than 12 hours to manufacture a battery cell.

The electrolyte solution used was prepared by mixing a mixed solvent in which 1M $LiPF_6$ was dissolved with vinylene carbonate (VC), 1,3-propene sultone (PRS), and lithium bis(oxalato)borate (LiBOB) mixed at a volume ratio of 1:0.5:0.5 (VC:PRS:LiBOB) as additives. The mixed solvent used was prepared by mixing ethylene carbonate (EC), ethyl methyl carbonate (EMC), and diethyl carbonate (DEC) at a volume ratio of 25:45:30 (EC:EMC:DEC).

<Method of measuring physical properties>

The physical properties mentioned in the present specification may be measured as described below, and the physical properties in the Examples and Comparative Examples were measured as described below.

1. Three-dimensional Atom Prove Tomography (3D APT)

The percentage by atoms of a first metal element in a metal composite or lithium compound particles was derived through three-dimensional APT. The APT is performed using a probe, which is an analytical sample.

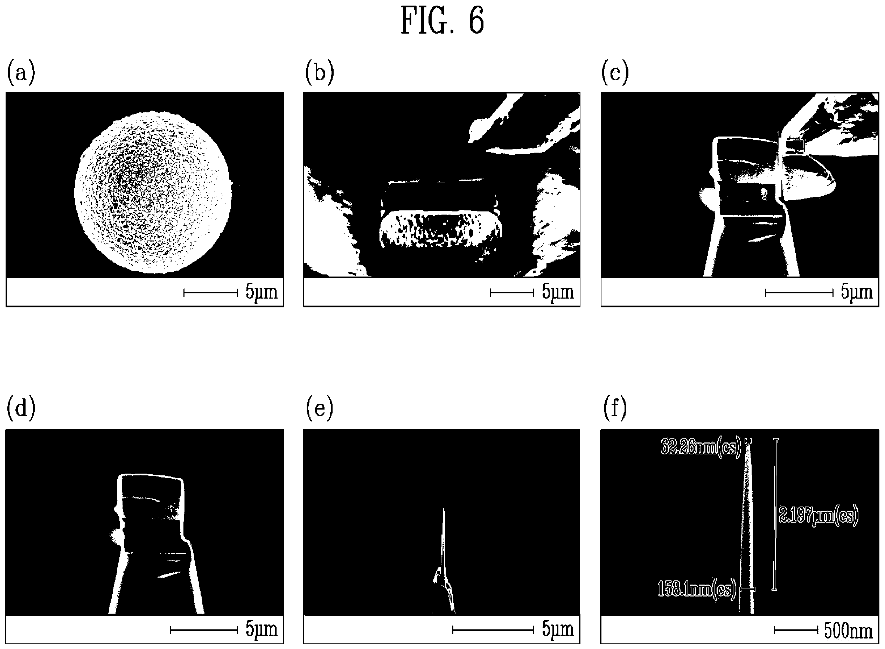

FIG. 6 shows a series of manufacturing processes of a probe for the APT using scanning electron microscope (SEM) images. Referring to FIG. 6, a metal composite of a spherical shape (see FIG. 6A) was cut horizontally (see FIG. 6B), and the cut metal composite was milled to manufacture a probe of a tip shape with a length of about 100 nm (see FIGS. 6C to 6F).

The manufactured probe was cut to perform three-dimensional APT, and the results were analyzed to derive the percentage by atoms of a first metal element in the metal composite or lithium compound particles.

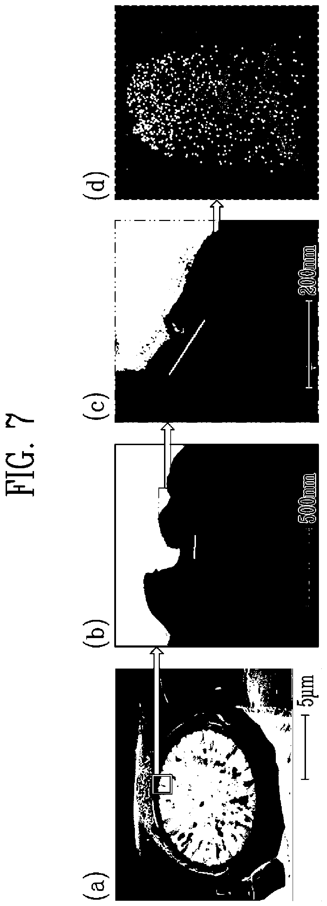

FIG. 7 shows SEM images of an analytical area in three-dimensional APT in the present invention. In FIG. 7, (a) shows a cut surface of the probe, (b) shows an enlarged view of the rectangular portion of (a) (scale bar: 500 nm), and (c) shows an enlarged view of the rectangular portion of (b), and (d) shows an analytical image of the three-dimensional APT for the rectangular portion of (c). Through FIG. 7, the analytical area in the three-dimensional APT may be confirmed.

2. Content of each metal element in metal composite

A sample of the metal composite weighing 0.1 g was placed in a vial bottle, and about 1 mL of nitric acid was added. Thereafter, a small amount of acidic substance (nitric acid:sulfuric acid = 3:1 (w/w) mixed solution) was added to the vial bottle, which was heated on a hot plate to dissolve the sample. When the sample was completely dissolved and had a transparent color, tertiary ultrapure water was added to make the total volume 10 mL to prepare an analytical sample. With the analytical sample, the content of each metal element in the metal composite was measured (unit: mass ppm) through an ICP-OES analysis, and the analysis conditions are described below. Based on the content of each metal element measured according to the analysis, the content ratio between metal elements or the structural formula of the metal composite as well as the lithium compound particles included in the metal composite may be derived.

[ICP-OES analysis conditions]

RF power: 1,300 W
Torch Height: 15.0 mm
Plasma Gas Flow: 15.00 L/min
Sample Gas Flow: 0.8 L/min
Aux. Gas Flow: 0.2 L/min
Pump Speed: 1.5 mL/min
Internal Standard: yttrium (Y) or scandium (Sc)

3. Discharge capacity compared to percentage by mole of nickel

A constant current was applied at a rate of 1.5 C at 25 °C until the voltage of a battery cell reached 4.2 V. Thereafter, the battery cell was discharged at a current of 0.3 C rate at the same temperature as above until the voltage of the battery cell reached 2.5 V, and at this time, the discharged capacity ($C_h$) was measured.

The content (unit: mass ppm) of nickel (Ni), cobalt (Co), and manganese (Mn) among the metal elements in the metal composite was derived, and the percentage by mole of nickel (Ni) ($Ni_{rt\%}$) among the three metal elements was derived through the derived content.

The discharge capacity compared to the percentage by mole of nickel was derived by defining it ($C_h$/Nirt%) as a value of the discharged capacity ($C_h$) measured above divided by the percentage by mole of nickel (Ni) ($Ni_{rt\%}$) derived above.

4. Capacity retention rate

The capacity maintenance rate was derived as $L_R$ according to Formula CR below.

$$[\text{Formula CR}]$$

$$L_R = L_2/L_1 \text{ X } 100 \text{ (\%)}$$

In Formula CR, $L_1$ is the discharge capacity of a battery cell in one cycle under the condition that 45 °C is maintained, and $L_2$ is the discharge capacity of the battery cell in 500 cycles under the condition that 45 °C is maintained, where one cycle is defined as charging to 4.2 V and 0.05 C at 0.5 C current and in the CC-CV charging mode at 45 °C and then discharging to 2.5 V at 0.5 C current.

5. Amount of gas generation

The total amount of gas generated when the battery cell was charged and discharged in 500 cycles under the condition that 45 °C is maintained was measured. In the above, one cycle is defined as charging to 4.2 V and 0.05 C at 0.5 C current and in the CC-CV charging mode at 45 °C and then discharging to 2.5 V at 0.5 C current.

For the metal composites 10 prepared in Examples 1 to 19 and Comparative Examples 1 to 6 and each of the manufactured battery cells including the metal composites 10, the measured physical properties are summarized in Table 1 below. In Table 1 below, $R_1$ is as defined in Mathematical Formula 1 below, and $R_2$ is as defined in Mathematical Formula 2 below.

[Mathematical Formula 1]

$$R_1 = M_1/A$$

In Mathematical Formula 1, $M_1$ is the percentage by atoms of the first metal element in the lithium compound particles, and A is the percentage by atoms of the first metal element in the metal composite.

[Mathematical Formula 2]

$$R_2 = W_B/W_A$$

In Mathematical Formula 2, $W_B$ is the percentage by weight of the second metal element based on the total weight of the metal composite, and $W_A$ is the percentage by weight of the first metal element based on the total weight of the metal composite.
In addition, in Table 1 below, $C_h/Ni_{rt\%}$ means discharge capacity compared to nickel mole ratio%, and LR is defined in the formula CR below.

[Formula CR]

$$L_R = L_2/L_1 \text{ X } 100 \text{ (\%)}$$

In Formula CR, $L_1$ is the discharge capacity of a battery cell in one cycle under the condition that 45 °C is maintained, and $L_2$ is the discharge capacity of the battery cell in 500 cycles under the condition that 45 °C is maintained, where one cycle is defined as charging to 4.2 V and 0.05 C at 0.5 C current and in the CC-CV charging mode at 45 °C and then discharging to 2.5 V at 0.5 C current.

[Table 1]

|  | $V_1$ | $T_1$ | $M^1$ | $M_2$ | $R_1$ | $R_2$ | $C_h/Ni_{rt}$ % | $L_R$ | Amount of gas generation (mL/g) |
|---|---|---|---|---|---|---|---|---|---|
| Example 1 | 5 | 680 | Al | Sr | 1.00 | 0.29 | 2.39 | 80% | 2.58 |
| Example 2 | 2 | 690 | Al | Sr | 0.91 | 0.19 | 2.34 | 84% | 2.43 |
| Example 3 | 2 | 690 | Al and Zr | Sr | 0.98 | 0.50 | 2.38 | 83% | 2.62 |
| Example 4 | 2 | 690 | Al and Ti | Sr | 1.00 | 0.22 | 2.32 | 83% | 2.64 |
| Example 5 | 5 | 700 | Al | Sr | 1.00 | 0.54 | 2.38 | 85% | 1.35 |
| Example 6 | 2 | 710 | Al | Sr | 0.66 | 0.63 | 2.36 | 89% | 1.42 |
| Example 7 | 2 | 710 | Al | Sr | 0.79 | 0.47 | 2.36 | 89% | 1.40 |
| Example 8 | 5 | 700 | Al | Sr | 0.96 | 0.36 | 2.38 | 90% | 1.38 |
| Example 9 | 5 | 700 | Al | Sr | 0.95 | 0.67 | 2.38 | 91% | 1.46 |
| Example 10 | 5 | 700 | Al and Zr | Sr | 0.94 | 0.36 | 2.37 | 88% | 1.40 |
| Example 11 | 5 | 700 | Al and Sb | Sr | 0.86 | 0.30 | 2.36 | 87% | 1.45 |
| Example 12 | 5 | 700 | Al and Ti | Sr | 0.86 | 0.31 | 2.38 | 87% | 1.42 |
| Example 13 | 5 | 730 | Al | Sr | 0.67 | 0.50 | 2.49 | 91% | 1.28 |
| Example 14 | 5 | 730 | Al and Zr | Sr | 0.68 | 0.47 | 2.51 | 90% | 1.30 |
| Example 15 | 5 | 730 | Al and Nb | Sr | 0.63 | 0.45 | 2.52 | 90% | 1.38 |
| Example 16 | 5 | 730 | Al and Ti | Sr | 0.63 | 0.75 | 2.48 | 93% | 1.33 |

(continued)

| | $V_1$ | $T_1$ | $M^1$ | $M_2$ | $R_1$ | $R_2$ | $C_h/Ni_{rt}$ % | $L_R$ | Amount of gas generation (mL/g) |
|---|---|---|---|---|---|---|---|---|---|
| Example 17 | 5 | 700 | Al | Sr | 0.92 | 0.07 | 2.34 | 89% | 2.18 |
| Example 18 | 5 | 700 | Al | Sr | 0.99 | 0.24 | 2.35 | 89% | 1.43 |
| Example 19 | 5 | 700 | Al | Sr | 0.98 | 0.48 | 2.37 | 90% | 1.40 |
| Comparative Example 1 | 10 | 690 | Al | Sr | 0.20 | 0.20 | 2.28 | 86% | 11.8 |
| Comparative Example 2 | 5 | 700 | Al | Sr | 0.92 | 0 | 2.39 | 54% | 21.6 |
| Comparative Example 3 | 5 | 700 | Al | Sr | 0.20 | 2.50 | 2.21 | 91% | 1.85 |
| Comparative Example 4 | 10 | 690 | Al and Zr | Sr | 0.39 | 0.54 | 2.25 | 82% | 14.8 |
| Comparative Example 5 | 10 | 690 | Al and Sb | Sr | 0.22 | 0.94 | 2.31 | 88% | 20.2 |
| Comparative Example 6 | 10 | 690 | Al and Ti | Sr | 0.17 | 1.13 | 2.19 | 80% | 1.97 |

$V_1$: Temperature raising rate in calcining (unit: °C/min)
$T_1$: Calcining temperature in calcining (unit: °C)
$M^1$: First metal element
$M^2$: Second metal element

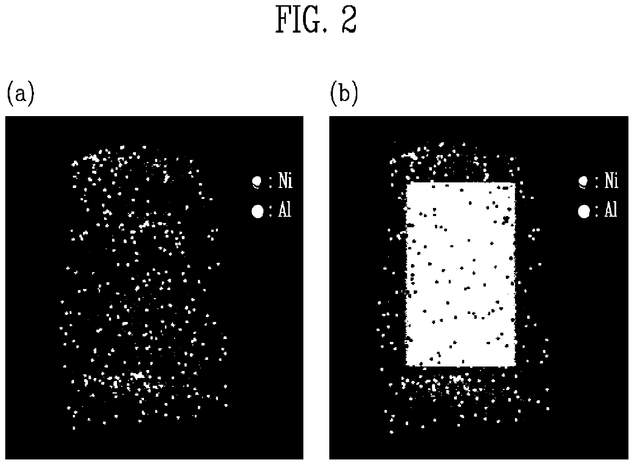

Referring to Table 1, Examples 1 to 19 have $R_1$ and $R_2$ within the specified ranges. As a result, Examples 1 to 19 exhibit excellent discharge capacity, excellent structural stability, and lifespan retention rate even in a high-temperature environment. Referring to FIG. 2, for the metal composite of Example 5, a three-dimensional APT analysis image (FIG. 2A) illustrating the first metal element ($M^1$) included in the entire metal composite and a three-dimensional APT analysis image (FIG. 2B) illustrating the first metal element ($M^1$) included in the lithium compound particles in the metal composite may be confirmed.

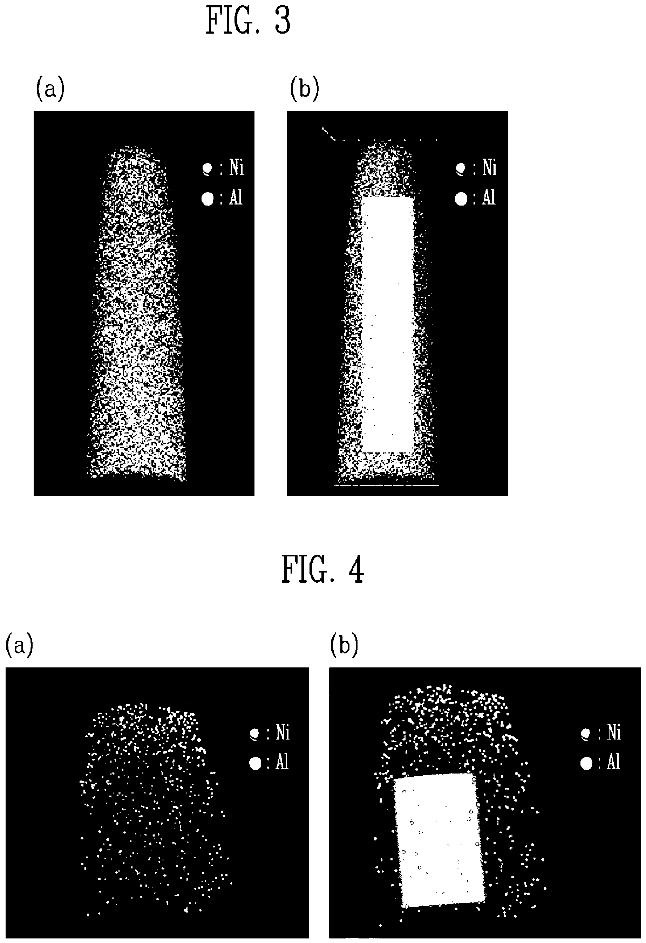

In addition, referring to FIG. 3, for the metal composite of Example 6, a three-dimensional APT analysis image (FIG. 3A) illustrating the first metal element ($M^1$) included in the entire metal composite and a three-dimensional APT analysis image (FIG. 3B) illustrating the first metal element ($M^1$) included in the lithium compound particles in the metal composite may be confirmed.

As shown in the examples of FIGS. 2 and 3, the percentage by atoms of the first metal element ($M^1$) may be derived through the three-dimensional APT analysis images.

Comparative Example 1 and Comparative Examples 4 to 6 represent cases where the temperature raising rate was set to be relatively high when raising the temperature from room temperature to the calcining temperature in the calcining (calcining step). Referring to Table 1, Comparative Example 1 and Comparative Examples 4 to 6 show a low $R_1$ value because the temperature raising rate is outside the specified range. Referring to Table 1, Comparative Example 1, Comparative Example 4, and Comparative Example 6 have a low discharge capacity compared to the content of nickel (Ni), and Comparative Example 1, Comparative Example 4, and Comparative Example 5 have the problem that the amount of gas generation is much.

Comparative Example 2 shows a case where strontium (Sr), which is a second metal element ($M^2$), is not included in the metal composite, and Comparative Example 3 shows a case where the strontium (Sr) is included in more than the specified range in the metal composite. Referring to Table 1, it is found that Comparative Example 2 does not include a second metal element ($M^2$), has a low capacity retention rate at 45 °C, which is higher than room temperature, and has a large amount of gas generation. In addition, referring to Table 1, it is found that Comparative Example 3 includes a second metal element ($M^2$) more than the specified range and has a low discharge capacity compared to the content of nickel (Ni).

Referring to FIG. 4, for the metal composite of Comparative Example 3, a three-dimensional APT analysis image (FIG. 4A) illustrating the first metal element ($M^1$) included in the entire metal composite and a three-dimensional APT analysis image (FIG. 4B) illustrating the first metal element ($M^1$) included in the lithium compound particles in the metal composite may be confirmed.

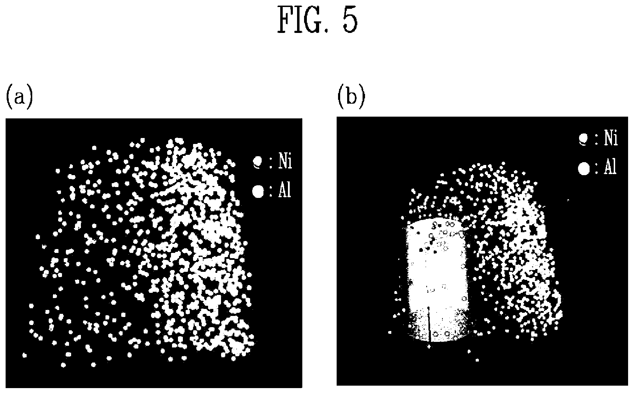

Referring to FIG. 5, for the metal composite of Comparative Example 5, a three-dimensional APT analysis image (FIG. 5A) illustrating the first metal element ($M^1$) included in the entire metal composite and a three-dimensional APT analysis image (FIG. 5B) illustrating the first metal element ($M^1$) included in the lithium compound particles in the metal composite may be confirmed.

As shown in the examples of FIGS. 4 and 5, the percentage by atoms of the first metal element ($M^1$) may be

derived through the three-dimensional APT analysis images.

Referring to Table 1, it is found that when $R_1$ is not in the specified range, the capacity retention rate at 45 °C is low, or the amount of gas generation is much, or the discharge capacity compared to the content of nickel (Ni) is low. In addition, referring to Table 1, $R_1$ and $R_2$ are not in the specified ranges, the capacity retention rate at 45 °C is low, or the amount of gas generation is much, or the discharge capacity compared to the content of nickel (Ni) is low.

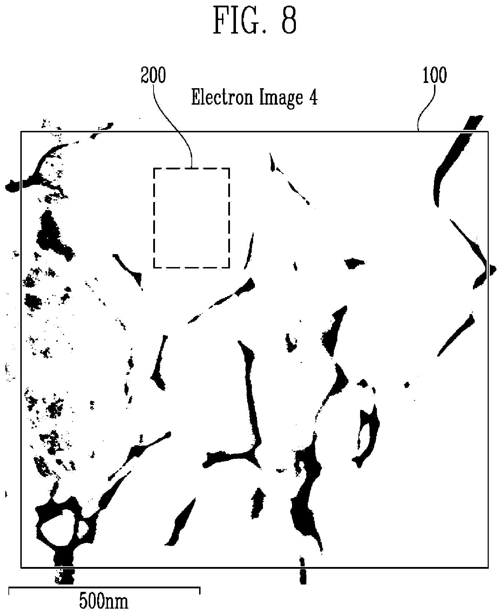

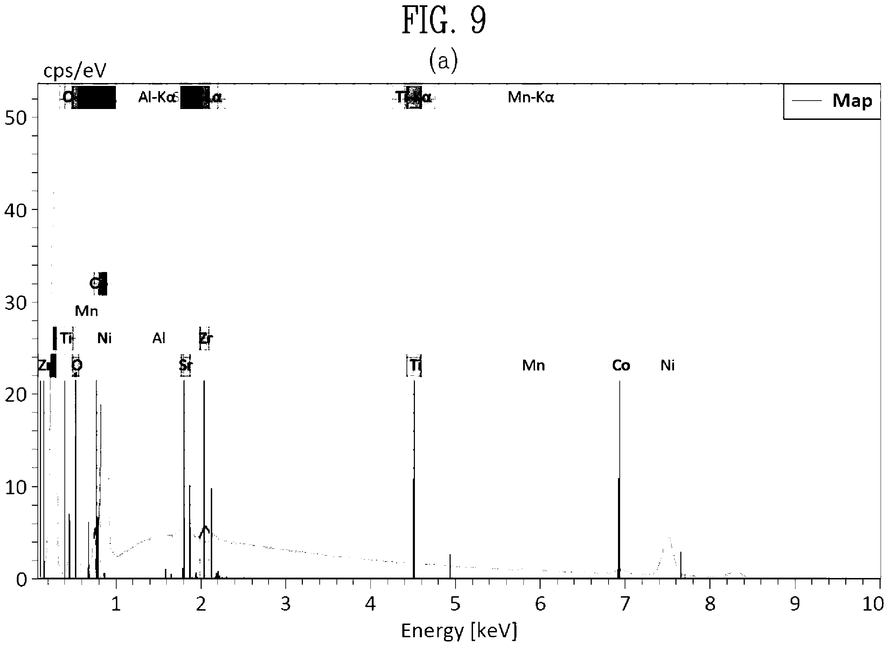

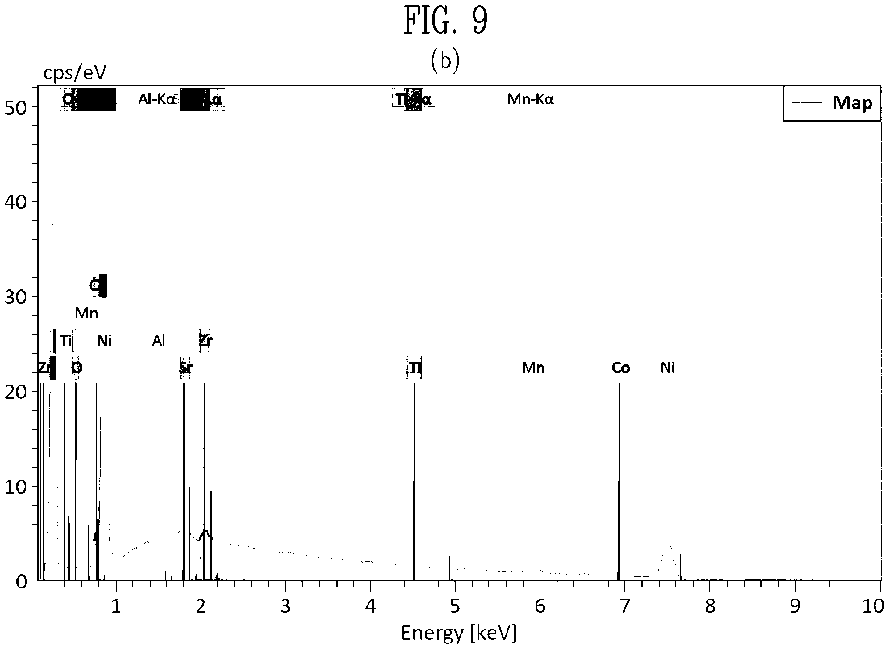

For the metal composite 10 prepared in Example 8, the results obtained from the Scanning Electron Microscope-Energy Dispersive X-ray spectroscopy (SEM-EDX) analysis method are shown in Table 1 and FIG. 9 below. As shown in FIG. 8, the SEM-EDX analyzed the ingredients each in an area 100 showing all the positions of the first metal element ($M^1$) included in the metal composite 10 within the measurement range and an area 200 showing the positions of the first metal element ($M^1$) included in the lithium compound particles 11. Referring to FIG. 9, the results from an area 100 showing all the positions of the first metal element ($M^1$) included in the metal composite 10 within the measurement range (FIG. 9A); and (b) the results of an area 200 showing the positions of the first metal element ($M^1$) included in the lithium compound particles 11 within the measurement range (FIG. 9B) may be confirmed, and the results are summarized in Table 2 below for analysis. In Table 2 below, the meanings of $V_1$, $T_1$, $M^1$, $M^2$, and $R_1$ are the same as in Table 1.

[Table 2]

|  | $V_1$ | $T_1$ | $M^1$ | $M^2$ | $R_1$ |
|---|---|---|---|---|---|
| Example 8 | 5 | 700 | Al | Sr | 0.93 |

Referring to Table 2, the $R_1$ of the metal composite 10 prepared in Example 8 measured according to the SEM-EDX analysis method is about 0.93. In Table 1, the $R_1$ measured through three-dimensional APT is about 0.96, indicating that similar results are obtained even when the means for measuring $R_1$ is different. In addition, it may be expected that for $R_2$, which is derived by a similar method, similar results will be derived even when the means for measurement is different.

[Reference numerals]

    1: Battery cell
    2: Battery module
    3: Battery pack
    10: Metal composite
    11: Lithium compound particles
    12: Extra-particle region

**Claims**

1. A cathode active material comprising a metal composite including lithium compound particles represented by Structural Formula 1 below, wherein $R_1$ according to Mathematical Formula 1 below is in the range of 0.6 or more to 1 or less, and $R_2$ according to Mathematical Formula 2 below is in the range of 0.05 or more to 0.8 or less:

   [Structural Formula 1]      $Li_xNi_aCo_bMn_cM^1{}_dM^2{}_eO_{2+y}$

   wherein in Structural Formula 1, $0.95 \leq x \leq 1.10$, $0.75 \leq a \leq 1$, $0 < b \leq 0.2$, $0 < c \leq 0.2$, $0 < d \leq 0.15$, $0 < e \leq 0.1$, and $-0.5 \leq y \leq 0.1$, and $M_1$ is a first metal element, $M^2$ is a second metal element, wherein the first metal element includes one or more selected from the group consisting of Al, Ti, Zr, Sb, and Nb, and the second metal element includes one or more selected from the group consisting of Sr, Mg, Ba, Y, and Ce,

$$[\text{Mathematical Formula 1}]$$

$$R_1 = M_1/A$$

   wherein in Mathematical Formula 1, $M_1$ is the percentage by atoms of the first metal element in the lithium compound particles, and A is the percentage by atoms of the first metal element in the metal composite,

[Mathematical Formula 2]

$$R_2 = W_B/W_A$$

wherein in Mathematical Formula 2, $W_B$ is the percentage by weight of the second metal element based on the total weight of the metal composite, and $W_A$ is the percentage by weight of the first metal element based on the total weight of the metal composite.

2. The cathode active material according to claim 1, wherein the metal composite includes an extra-particle region, and the extra-particle region includes one or more selected from the group consisting of oxides, sulfides, sulfur oxides, fluoroxides, and hydrates of the first metal element.

3. The cathode active material according to claim 1, wherein the lithium compound particles include the first metal element in the range of 0.001 mole to 0.1 mole based on 1 mole of total lithium element.

4. The cathode active material according to claim 1, wherein the lithium compound particles include the second metal element in the range of 0.0001 mole to 0.05 mole based on 1 mole of total lithium element.

5. The cathode active material according to claim 1, wherein in the lithium compound particles, the first metal element includes Al and further includes one or more selected from the group consisting of Ti, Zr, Sb, and Nb.

6. The cathode active material according to claim 5, wherein $R_P$ according to the following Mathematical Formula P is in the range of 0.1 to 10,000:

[Mathematical Formula P]

$$R_P = N_{Al}/N_{M1}$$

In Mathematical Formula P, $N_{Al}$ is the percentage by mole of Al based on the total number of moles of the metal composite, and $N_{M1}$ is the combined percentage by mole of Ti, Zr, Sb, and Nb based on the total number of moles of the metal composite.

7. The cathode active material according to claim 5, wherein in the lithium compound particles, the first metal element includes Al and Ti, and $R_Q$ according to the following Mathematical Formula Q is in the range of 1,000 to 10,000:

[Mathematical Formula Q]

$$R_Q = N_{Al}/N_{Ti}$$

In Mathematical Formula Q, $N_{Al}$ is the percentage by mole of Al based on the total number of moles of the metal composite, and $N_{Ti}$ is the percentage by mole of Ti based on the total number of moles of the metal composite.

8. The cathode active material according to claim 5, wherein in the lithium compound particles, the first metal element includes Al and Zr, and $R_R$ according to the following Mathematical Formula R is in the range of 0.1 to 50:

[Mathematical Formula R]

$$R_R = N_{Al}/N_{Zr}$$

In Mathematical Formula R, $N_{Al}$ is the percentage by mole of Al based on the total number of moles of the metal composite, and $N_{Zr}$ is the percentage by mole of Zr based on the total number of moles of the metal composite.

9. The cathode active material according to claim 5, wherein in the lithium compound particles, the first metal element includes Al and Sb, and $R_S$ according to the following Mathematical Formula S is in the range of 1 to 100:

[Mathematical Formula S]

$$R_S = N_{Al}/N_{Sb}$$

In Mathematical Formula S, $N_{Al}$ is the percentage by mole of Al based on the total number of moles of the metal composite, and $N_{Sb}$ is the percentage by mole of Sb based on the total number of moles of the metal composite.

10. The cathode active material according to claim 5, wherein in the lithium compound particles, the first metal element includes Al and Nb, and $R_T$ according to the following Mathematical Formula T is in the range of 1 to 50:

[Mathematical Formula T]

$$R_T = N_{Al}/N_{Nb}$$

In Mathematical Formula T, $N_{Al}$ is the percentage by mole of Al based on the total number of moles of the metal composite, and $N_{Nb}$ is the percentage by mole of Nb based on the total number of moles of the metal composite.

11. A battery cell comprising: an electrode assembly and an electrolyte solution,

wherein the electrode assembly includes a cathode, an anode, and a separator interposed between the cathode and the anode,
wherein the cathode includes a cathode current collector and a cathode active material layer provided on at least one surface of the cathode current collector, and the cathode active material layer includes the cathode active material of claim 1.

12. A method of preparing a metal composite, comprising:

preparing a precursor of a metal composite with a dispersion including a nickel compound, a cobalt compound, and a manganese compound; and
calcining a mixture including one or more of the prepared precursor of the metal composite, a lithium compound, and a second compound including a second metal element,
wherein the calcining includes temperature raising in which the temperature is raised from room temperature to a final temperature in the range of 650 °C to 750 °C at a temperature raising rate of 1 °C/min to 8 °C/min,
wherein one or more selected from the group consisting of the dispersion and the mixture includes at least one first compound including the first metal element,
wherein the first metal element includes one or more selected from the group consisting of Al, Ti, Zr, Sb, and Nb, and
wherein the second metal element includes one or more selected from the group consisting of Sr, Mg, Ba, Y, and Ce.

13. The method according to claim 12, wherein the calcining further includes thermally treating in the range of 5 to 20 hours while maintaining the final temperature.

14. The method according to claim 13, wherein the calcining is performed in an environment where oxygen ($O_2$) gas passes.

15. The method according to claim 14, wherein in the calcining, oxygen gas passes at a flow rate in the range of 1 mL/min to 50 mL/min.

16. The method according to claim 12, wherein the preparing a precursor of the metal composite includes subjecting the dispersion to a reaction in a basic environment.

# FIG. 1

# FIG. 2

(a)

(b)

# FIG. 3

(a)

(b)

# FIG. 4

(a)

(b)

# FIG. 5

(a)

(b)

# FIG. 6

(a)

5μm

(b)

5μm

(c)

5μm

(d)

5μm

(e)

5μm

(f)

62.26nm(cs)

2.197μm(cs)

158.1nm(cs)

500nm

EP 4 503 181 A1

FIG. 7

# FIG. 8

# FIG. 9

## (a)

# FIG. 9

## (b)

EP 4 503 181 A1

# FIG. 10

FIG. 11

# FIG. 12

## INTERNATIONAL SEARCH REPORT

International application No.

**PCT/KR2023/004395**

| A. | CLASSIFICATION OF SUBJECT MATTER |
|---|---|

**H01M 4/36**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/052(2010.01); H01M 4/13(2010.01); H01M 4/131(2010.01); H01M 4/48(2010.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 이차전지(secondary battery), 도핑(doping), 니켈(nickel, Ni), 코발트(cobalt, Co), 망간(manganese, Mg), 알루미늄(aluminium, Al), 티타늄(titanium, Ti), 지르코늄(zirconium, Zr), 안티몬(stibium, Sb), 니오븀(niobium, Nb), 스트론튬(strontium, Sr), 마그네슘(magnesium, Mg), 바륨(barium, Ba), 이트륨(yttrium, Y), 함량(content), 중량(weight), 비율(ratio)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2019-0091155 A (LG CHEM, LTD.) 05 August 2019 (2019-08-05)<br>See claims 1, 8 and 9; and paragraphs [0092], [0107]-[0115], [0145]-[0149] and [0185]-[0188]. | 1,3-8,11-16 |
| Y | | 2,9,10 |
| Y | KR 10-2020-0065856 A (LG CHEM, LTD.) 09 June 2020 (2020-06-09)<br>See claims 1, 2 and 4; and paragraphs [0072] and [0092]-[0095]. | 2,9,10 |
| A | KR 10-2013-0118255 A (LG CHEM, LTD.) 29 October 2013 (2013-10-29)<br>See entire document. | 1-16 |
| A | KR 10-2017-0073217 A (SAMSUNG ELECTRONICS CO., LTD. et al.) 28 June 2017 (2017-06-28)<br>See entire document. | 1-16 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2023** | **25 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/004395** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-1746899 B1 (IUCF-HYU (INDUSTRY-UNIVERSITY COOPERATION FOUNDATION HANYANG UNIVERSITY)) 14 June 2017 (2017-06-14)<br>See entire document. | 1-16 |

Form PCT/ISA/210 (second sheet) (July 2022)

## INTERNATIONAL SEARCH REPORT
### Information on patent family members

International application No.

**PCT/KR2023/004395**

| Patent document cited in search report | | | Publication date (day/month/year) | Patent family member(s) | | | Publication date (day/month/year) |
|---|---|---|---|---|---|---|---|
| KR | 10-2019-0091155 | A | 05 August 2019 | KR | 10-2507631 | B1 | 08 March 2023 |
| KR | 10-2020-0065856 | A | 09 June 2020 | CN | 113692659 | A | 23 November 2021 |
| | | | | EP | 3872902 | A1 | 01 September 2021 |
| | | | | JP | 2022-513681 | A | 09 February 2022 |
| | | | | JP | 7191420 | B2 | 19 December 2022 |
| | | | | US | 2022-0045322 | A1 | 10 February 2022 |
| | | | | WO | 2020-111545 | A1 | 04 June 2020 |
| KR | 10-2013-0118255 | A | 29 October 2013 | KR | 10-1527539 | B1 | 10 June 2015 |
| | | | | US | 10424781 | B2 | 24 September 2019 |
| | | | | US | 2013-0323599 | A1 | 05 December 2013 |
| | | | | US | 2017-0331103 | A1 | 16 November 2017 |
| KR | 10-2017-0073217 | A | 28 June 2017 | KR | 10-2023-0043799 | A | 31 March 2023 |
| | | | | US | 10290861 | B2 | 14 May 2019 |
| | | | | US | 2017-0179470 | A1 | 22 June 2017 |
| KR | 10-1746899 | B1 | 14 June 2017 | CN | 105378985 | A | 02 March 2016 |
| | | | | EP | 3007253 | B1 | 02 October 2019 |
| | | | | KR | 10-2014-0142171 | A | 11 December 2014 |
| | | | | US | 10270089 | B2 | 23 April 2019 |
| | | | | WO | 2014-193203 | A1 | 04 December 2014 |

Form PCT/ISA/210 (patent family annex) (July 2022)

**EP 4 503 181 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220150693

- KR 1020220142853